# EUROPEAN PATENT APPLICATION

(11) **EP 4 613 647 A1**
(43) Date of publication of application: **10.09.2025**
(21) Application number: 23885610.8
(22) Date of filing: 25.10.2023
(51) Int. Cl.: B64D 13/06, B64B 1/06, B64C 39/02, B64D 27/24

(54) **AIR CONDITIONING DEVICE, AIR CONDITIONING CONTROL DEVICE, AND AIR CONDITIONING CONTROL PROGRAM**

(30) Priority: 04.11.2022 JP 2022177442
(71) Applicant: DENSO CORPORATION, Kariya-city, Aichi 448-8661 (JP)
(72) Inventor: TANIMOTO, Naoki, Kariya-city, Aichi 448-8661 (JP); TAKEMURA, Yuichi, Kariya-city, Aichi 448-8661 (JP); FUKUSHI, Masato, Kariya-city, Aichi 448-8661 (JP); FUJII, Keita, Kariya-city, Aichi 448-8661 (JP)
(74) Representative: TBK
(86) International application number: PCT/JP2023/038467
(87) International publication number: WO 2024/095853

(57) **Abstract**

An air conditioning controller (150) acquires in-cabin environment information, outside environment information, and flight information in steps S101 to S103. The air conditioning controller determines whether a window fogging condition is satisfied in a window fogging determination process. The air conditioning controller uses in-cabin environment information, outside environment information, and flight information, for a determination of whether the window fogging condition is satisfied. When the window fogging condition is not satisfied, the air conditioning controller performs an inside air mode process in step S107. In the inside air mode process, an operation mode of an air conditioner system (110) is set to an inside air mode. When the window fogging condition is satisfied, the air conditioning controller performs an outside air mode process in step S108. In the outside air mode process, the operation mode of the air conditioner system (110) is set to an outside air mode. In the outside air mode, taken-in outside air (Air2) is introduced into a cabin (15).

## Description

### CROSS REFERENCE TO RELATED APPLICATION

The present application is based on Patent Application No. 2022-177442 filed in Japan on November 4, 2022, and the contents of the basic application are incorporated by reference in their entirety.

### TECHNICAL FIELD

The disclosure in the specification relates to an air conditioner, an air conditioning control device, and an air conditioning control program.

### BACKGROUND INFORMATION

Patent Document 1 describes an aircraft having an anti-fogging system installed thereon. In such an aircraft, the fogging of windows, such as a windshield, is prevented by an anti-fogging system. The anti-fogging system prevents windows from fogging by heating a window and an area around the window.

### PRIOR ART REFERENCES

### Patent documents

| | |
|---|---|
| Patent Document 1 | JP 2016-113148 A |

### SUMMARY OF THE INVENTION

However, in the above-mentioned Patent Document 1, a dedicated device is required for heating the window and the area around the window. Therefore, in an aircraft and other aircrafts that do not have the dedicated device installed thereon, there is a concern that the pilot's visibility will be reduced due to fogging of the windows. In such case, the safety of the aircraft will be compromised due to the fogging of the window.

It is an object of the present disclosure to provide an air conditioner, an air conditioning control device, and an air conditioning control program that can improve the safety of an aircraft.

The various aspects disclosed in the present specification employ different technical means to achieve their respective objects.

Further, the symbols in parentheses in the claims and in the present section are merely examples showing the correspondence with the specific means described below in the embodiments as one aspect, and do not limit the technical scope.

In order to achieve the above object, an air conditioner according to an aspect of the present disclosure is provided in an aircraft flying by using an electrical propulsion device, for air-conditioning the aircraft by using at least one of inside air and outside air of the aircraft. The air conditioner includes: a window fogging determination unit configured to determine whether a window fogging condition for fogging a window of the aircraft is satisfied; and an outside air increase unit configured to increase an amount of the outside air introduced into an inside of the aircraft when the window fogging condition is satisfied.

According to the air conditioner described above, when the window fogging condition is satisfied in the aircraft, the amount of outside air introduced into an inside of the aircraft is increased. In such configuration, the outside air introduction can prevent the window of the aircraft from fogging. Further, even when the window of the aircraft becomes fogged, the fogging can be reduced by introducing outside air. Therefore, even when the aircraft is not equipped with a dedicated device for heating the window, an outside air introduction function of an air conditioner can be used to prevent the pilot's visibility from being impaired by the fogging of the window. In such manner, the air conditioner can increase the safety of the aircraft.

An air conditioning control device according to an aspect is provided in an aircraft that flies by an electric propulsion device and is configured to control an air conditioner that performs air-conditioning of the aircraft by using at least one of inside air and outside air of the aircraft. The air conditioning control device includes: a window fogging determination unit configured to determine whether a window fogging condition for fogging a window of the aircraft is satisfied; and an outside air increase unit configured to increase an amount of the outside air introduced into an inside of the aircraft when the window fogging condition is satisfied.

According to the air conditioning control device described above, the safety of the aircraft is improvable, similarly to the above-described air conditioner.

An air conditioning control program according to an aspect of the present disclosure is for controlling an air conditioner, which is provided in an aircraft flying by an electric propulsion device to perform an air-conditioning of the aircraft by using at least one of inside air and outside air of the aircraft. The air conditioning control program is configured to cause at least one processor to execute instruction of: determining whether a window fogging condition for fogging a window of the aircraft is satisfied; and increasing an amount of the outside air introduced into an inside of the aircraft when the window fogging condition is satisfied.

According to the air conditioning control program described above, the safety of the aircraft is improvable, similarly to the above-described air conditioner.

### BRIEF DESCRIPTION OF THE DRAWINGS

FIG. 1 is a diagram showing a configuration of an eVTOL according to a first embodiment;
FIG. 2 is a block diagram showing an electrical configuration of a flight system and an air conditioner;
FIG. 3 is a flowchart showing a procedure of an air conditioning control process;
FIG. 4 is a flowchart showing a procedure of a window fogging determination process;
FIG. 5 is a flowchart showing a procedure of an air conditioning control process in a second embodiment.;
FIG. 6 is a flowchart showing a procedure of a determination value correction process;
FIG. 7 is a flowchart showing a procedure of a window fogging determination process;
FIG. 8 is a flowchart showing the procedure of an air conditioning control process in a third embodiment; and
FIG. 9 is a flowchart showing a procedure of a window fogging determination process in a fourth embodiment.

### DETAILED DESCRIPTION

Hereinafter, plural embodiments for carrying out the present disclosure will be described with reference to the drawings. In each embodiment, parts corresponding to matters explained in the preceding embodiment may be given the same reference numerals, and duplicate explanations may be omitted. In case that only a part of a configuration is described in each embodiment, other embodiments previously described may be applied to the other parts of such configuration. Further to parts that are specifically described explicitly as combinable in each embodiment, embodiments may be partially combinable even if not explicitly so described, on condition that there is no particular problem with such combination.

### <First Embodiment>

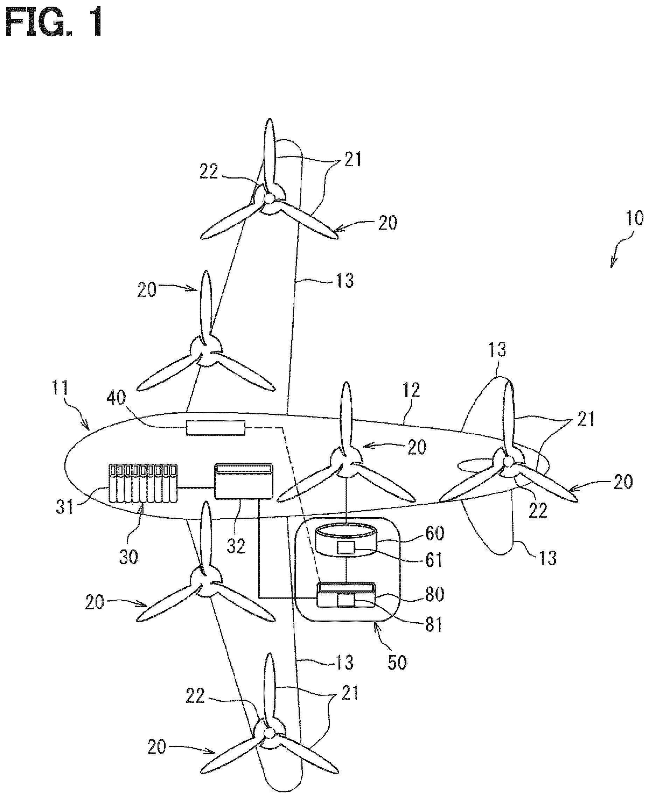

A flight system 30 shown in FIG. 1 is installed on an eVTOL 10. The eVTOL 10 is an electric vertical take-off and landing aircraft. An electric vertical take-off and landing aircraft is an aircraft electrically-driven for vertical take-off and landing, which is capable of taking off and landing vertically. The eVTOL stands for electric Vertical Take-Off and Landing aircraft. The eVTOL 10 is an electrically-driven aircraft that flies through the atmosphere and may also be referred to as an electric aircraft. The eVTOL 10 is also an electrically-driven aircraft and may be referred to as an electric aircraft. The eVTOL 10 may be either a manned aircraft with an occupant on board, or an unmanned aircraft without an occupant on board. The eVTOL 10 is operated by a pilot as a controller. The pilot may operate the eVTOL 10 as an on-board member, or may remotely operate the eVTOL 10 without boarding the eVTOL 10. The light system 30 is a system that drives eVTOL 10 to fly. The flight system 30 may be referred to as a propulsion system. On-board members may sometimes be referred to as passengers.

The eVTOL 10 includes an airframe 11 and a rotor 20. The airframe 11 includes a body 12 and wings 13. The body 12 is a fuselage of the airframe 11 and has a shape that extends, for example, in a front-rear direction. The body 12 has an occupant compartment for accommodating an occupant on board. The wings 13 extend from the body 12 and are provided in plurality on the body 12. The wing 13 is a fixed wing. The multiple wings 13 include a main wing, a tail wing, and the like.

The eVTOL 10 includes a cabin 15 and a window 16. The cabin 15 is provided inside the eVTOL 10. For example, the cabin 15 is an inside space of the body 12 and is formed by the body 12. The cabin 15 includes an occupant compartment and a cargo compartment. The occupant compartment has a space for accommodating occupants. The occupant compartment includes a passenger compartment and a pilot compartment. The passenger compartment is a space for accommodating passengers. The pilot compartment is a space for accommodating a pilot.

The window 16 is provided in the cabin 15. Multiple windows 16 are arranged along an outer surface of the body 12. The window 16 includes a window opening and a window panel. The window opening is an opening provided on the body 12. The window panel is disposed in the window opening. The window panel is made of a glass material, a resin material, or the like. The window panel is a window glass or the like. The window 16 may be of an openable or non-openable type.

Multiple rotors 20 are provided on the airframe 11. The eVTOL 10 is a multicopter having at least three rotors 20. For example, at least four rotors 20 are provided on the airframe 11. The rotors 20 are provided on both of the body 12 and the wings 13. The rotor 20 rotates about a rotor axis. The rotor axis is, for example, a centerline of the rotor 20. The rotor 20 is a rotating wing and is capable of generating at least one of thrust and lift for the eVTOL 10. The rotor 20 may also be referred to as a propeller.

The rotor 20 includes a blade 21 and a rotor head 22. Multiple blades 21 are arranged in a circumferential direction of the rotor axis. The rotor head 22 connects the multiple blades 21 together. The rotor 20 has a rotor shaft (not shown). The rotor shaft is a rotation axis of the rotor 20, and extends from the rotor head 22 along the rotor axis.

Flight modes of the eVTOL 10 include vertical takeoff, vertical landing, cruise, hovering, and the like. The eVTOL 10 is capable of taking off from a takeoff point by ascending vertically without running, for example, as a vertical takeoff. The eVTOL 10 is capable of making a vertical landing, for example, by descending vertically and touching down at a landing point without running.

Further, the flight mode of the eVTOL 10 includes lift. In the lift, the eVTOL 10 moves in an up and down directions. For example, lift includes the eVTOL 10 ascending in a vertical direction and the eVTOL 10 descending in a vertical direction. The eVTOL 10 lifts upward when vertically taking off. The eVTOL 10 lifts downward when vertically landing.

The eVTOL 10 is a tilt rotor aircraft. In the eVTOL 10, the rotor 20 can be tilted. That is, a tilt angle of the rotor 20 is adjustable. For example, when the eVTOL 10 ascends, the orientation of the rotor 20 is set so that the rotor axis extends in the vertical direction. In such case, the rotor 20 functions as a lift rotor for lifting eVTOL 10. The rotor 20 also functions as a hovering rotor for hovering the eVTOL 10. A hovering rotor may also be called as a hover rotor.

The eVTOL 10 includes a tilt mechanism (not shown). The tilt mechanism includes a motor and the like, and is driven to adjust the tilt angle of the rotor 20. The tilt mechanism may also be referred to as a tilt drive unit. For example, in the eVTOL 10, the wings 13 can be tilted relative to the body 12. In other words, it is possible to tilt the rotor 20 together with the wings 13. In this eVTOL 10, the tilt angle of the rotor 20 is adjusted by adjusting an inclination angle of the wings 13 relative to the body 12. In this eVTOL 10, the mechanism that adjusts the inclination angle of the wings 13 is a tilt mechanism.

Further, in the eVTOL 10, the rotor 20 may be able to tilt relative to the airframe 11. For example, the tilt angle of the rotor 20 may be adjusted by adjusting a relative inclination angle of the rotor 20 with respect to the wings 13.

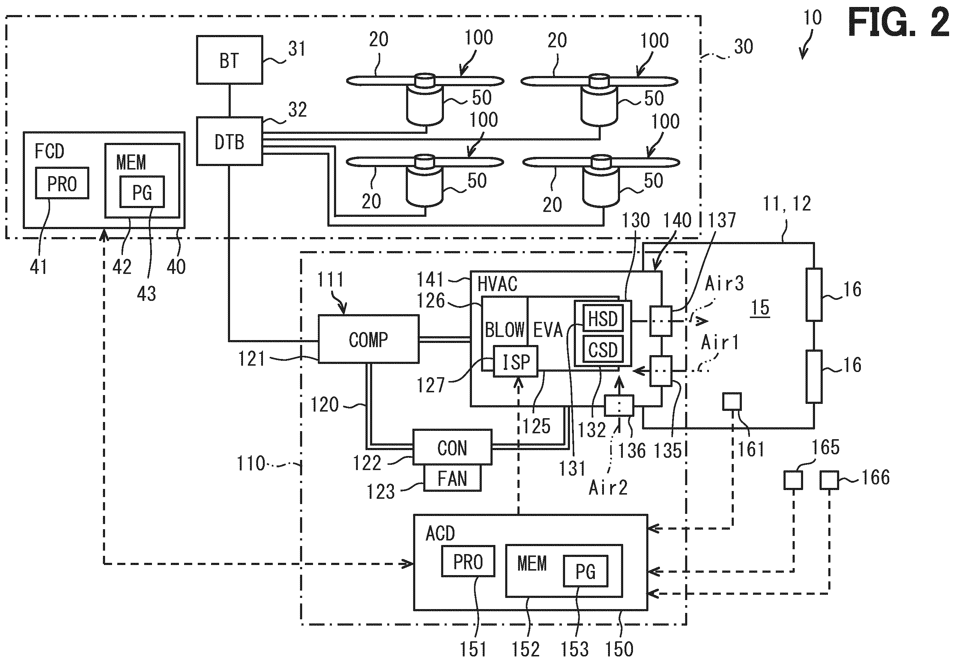

As shown in FIGS. 1 and 2, the flight system 30 includes a battery 31, a distributor 32, a flight controller 40, and an EPU 50. The flight controller 40 includes a processor 41, a memory 42, and a program 43. In FIG.2, the battery 31 is designated as BT, the distributor 32 is designated as DTB, the flight controller 40 is designated as FCD, the processor 41 is designated as PRO, the memory 42 is designated as MEM, and the program 43 is designated as PG.

The EPU 50 is a device that drives the rotor 20 to rotate, and corresponds to a drive device. EPU is an abbreviation for Electric Propulsion Unit. The EPU 50 may also be referred to as an electric drive device. The EPU 50 is provided individually for each of the multiple rotors 20. The EPU 50 is aligned with the rotor 20 along the rotor axis. The EPU 50 is fixed to the airframe 11. The EPU 50 rotatably supports the rotor 20. The EPU 50 is connected to the rotor 20.

The rotor 20 is fixed to the airframe 11 via the EPU 50. The EPU 50 is designed not to be tilted relative to the rotor 20. The EPU 50 is tiltable together with the rotor 20. When the tilt angle of the rotor 20 is adjusted, the orientation of the EPU 50 is set together with the rotor 20.

As shown in FIG. 1, the EPU 50 includes a motor device 60 and an inverter device 80. The motor device 60 includes a motor 61. In the motor device 60, a motor 61 is accommodated in a motor housing. The motor 61 is a multiple-phase AC motor, e.g., a three-phase or six-phase AC rotating electric machine. The motor 61 is a flight power source for eVTOL 10, and functions as an electric motor. The motor 61 is capable of driving and rotating the rotor 20 to let the eVTOL 10 fly. The motor 61 is a flight motor for flying the eVTOL 10. The motor 61 is driven by electric power from the battery 31. The EPU 50 drives the motor 61 to rotate the rotor 20. The motor 61 is, for example, a brushless motor.

The motor 61 includes a motor stator, a motor rotor, and a motor shaft. The motor shaft drives rotation together with the motor rotor relative to the motor stator. The motor shaft is connected to the rotor shaft, and rotates with the rotor shaft. The motor device 60 is capable of driving the rotor 20 to rotate in conjunction with the driving rotation of the motor 61. The motor rotor rotates about the motor axis. The motor axis is a center line of the motor 61. In the EPU 50, the motor device 60 and the inverter device 80 are arranged along the motor axis.

The inverter device 80 includes an inverter circuit 81. In the inverter device 80, the inverter circuit 81 is accommodated in an inverter housing. The inverter circuit 81 drives the motor 61 by converting electric power supplied to the motor 61. The inverter circuit 81 may be referred to as a drive unit. The inverter circuit 81 converts the electric power supplied to the motor 61 from direct current (DC) to alternating current (AC). The inverter circuit 81 is a power converter that converts electric power. The inverter circuit 81 is a multiphase power converter, and performs power conversion for each of the multiple phases. The inverter circuit 81 is, for example, a three-phase inverter, and may simply be referred to as an inverter. The motor 61 is driven in response to a voltage and electric current supplied from the inverter circuit 81.

The inverter device 80 includes an inverter controller. The inverter controller controls the motor via the inverter circuit 81. The inverter controller controls the inverter circuit 81 to thereby control the motor 61. The inverter controller is electrically connected to the flight controller 40, and performs motor control in response to signals from the flight controller 40.

The battery 31 is connected to the EPU 50 to be capable of supplying electric power to the EPC 50. The battery 31 is a power supply unit that supplies electric power to the EPU 50, and corresponds to a power source. The battery 31 is a DC voltage source that applies a DC voltage to the EPU 50. The battery 31 includes a secondary battery that is chargeable and dischargeable. The secondary battery includes a lithium ion battery, a nickel metal hydride battery and the like. As the power source, a fuel cell, a generator, or the like may be used in addition to or instead of the battery 31. The battery 31 is capable of storing electric power, and corresponds to an electricity storage device.

The distributor 32 is electrically connected to the battery 31 and the multiple EPUs 50. The distributor 32 distributes the electric power from the battery 31 to the multiple EPUs 50. The battery 31 is electrically connected to the multiple EPUs 50 via the distributor 32. The battery 31 supplies electric power to the EPU 50 via the distributor 32.

The eVTOL 10 includes a propulsion device 100. The propulsion device 100 includes the rotor 20 and the EPU 50. The propulsion device 100 is capable of propelling the eVTOL 10 with the EPU 50 driving and rotating the rotor 20. The propulsion device 100 is capable of flying the eVTOL 10 by being driven by the electric power of the battery 31. The propulsion device 100 is an electrically-powered device. The propulsion device 100 is a device in which the rotor 20 and the EPU 50 are integrated.

The flight controller 40 shown in FIG. 2 is, for example, an ECU, and performs flight control for flying the eVTOL 10. The flight controller 40 is a control device that controls the flight system 30. For example, the flight controller 40 controls the EPU 50 and the propulsion device 100. The ECU is an abbreviation for Electronic Control Unit. The flight controller 40 is configured by using a computer as a main component. The computer includes a processor 41, a memory 42, an input/output interface, and a bus connecting the above. The memory 42 stores the program 43. The program 43 is a flight control program for performing flight control.

The processor 41 is hardware for arithmetic processing coupled to the memory 42. The processor 41 accesses the memory 42 to execute various processes such as flight control processes and the like. The memory 42 is a storage medium that stores programs and the like. For example, the memory 42 is a non-transitory, tangible storage medium that non-temporarily stores computer-readable programs and data. A non-transitory, tangible storage medium is realized by a semiconductor memory or a magnetic disk, for example. The program 43 includes computer readable instructions that cause the processor 41 to perform various functions. The processor 41 is a processing unit that executes instructions contained in a program in the memory 42 to perform a predetermined process.

The flight controller 40 is electrically connected to the EPU 50. The flight controller 40 performs flight control according to detection results of various sensors or the like. The flight control includes propulsion control for driving the propulsion device 100, and the like. The propulsion control includes EPU control, motor control and the like, for driving the EPU 50 and the motor 61.

The eVTOL 10 shown in FIG. 2 includes an air conditioner system 110. The air conditioner system 110 provides air conditioning for the eVTOL 10. The air conditioner system 110 generates conditioned air using at least one of inside air and outside air, and air-conditions the eVTOL 10 with the conditioned air. For example, the air conditioner system 110 conditions the cabin 15 by supplying conditioned air to the cabin 15. The air conditioner system 110 is capable of cooling and heating the cabin 15. The conditioned air may be temperature-adjusted inside/outside air, temperature-unadjusted inside/outside air, and the like. The air conditioner system 110 corresponds to an air conditioner.

The inside air is an air inside the airframe 11. For example, the inside air is the air in the cabin 15. The outside air is an air outside the airframe 11. The conditioned air is an air for air conditioning the eVTOL 10. The air conditioner system 110 takes in at least one of air and outside air, and generates conditioned air by adjusting the temperature, etc., of at least one of the inside air and the outside air.

The air conditioner system 110 has an inside air intake port 135, an outside air intake port 136, and an air conditioning outlet port 137. The inside air intake port 135 is an opening for taking in the inside air. The inside air intake port 135 is provided in the cabin 15, and draws the in inside air from the cabin 15. The outside air intake port 136 is an opening for taking in the outside air. The outside air intake port 136 is provided on an outside of the airframe 11 and takes in the outside air from outside the airframe 11. The air conditioning outlet port 137 is an opening for blowing out conditioned air. The air conditioning outlet port 137 is provided in the cabin 15, and blows out conditioned air into the cabin 15.

In the air conditioner system 110, a conditioned air Air3 is generated using at least one of a taken-in inside air Air1 and a taken-in outside air Air2. The taken-in inside air Air1 is an inside air taken in through the inside air intake port 135. The taken-in inside air Air1 is an inside room air taken into the air conditioner system 110. The air conditioner system 110 is capable of performing inside air circulation. During the inside air circulation, the inside air including the taken-in inside air Air1 circulates between the cabin 15 and the air conditioner system 110. When the inside air circulation is performed, the air conditioner system 110 generates the conditioned air Air3 using the taken-in inside air Air1.

The taken-in outside air Air2 is an outside air taken in through the outside air intake port 136. The taken-in outside air Air2 is an outside air introduced into the air conditioner system 110. The air conditioner system 110 is capable of introducing the outside air. During the outside air introduction, the outside air taken in by the air conditioner system 110 is introduced into the cabin 15 as the taken-in outside air Air2. That is, the outside air is introduced into the cabin 15 via the air conditioner system 110. The taken-in outside air Air2 corresponds to the introduced outside air. When the outside air is being introduced, the air conditioner system 110 generates conditioned air Air3 by using the taken-in outside air Air2.

In the present embodiment, only one of the inside air circulation and the outside air introduction is performed. For example, when inside air circulation is being performed, the outside air introduction is stopped. On the other hand, when outside air introduction is being performed, inside air circulation is stopped. It should be noted that the air conditioner system 110 may perform both of inside air circulation and outside air introduction.

The air conditioner system 110 is connected to the battery 31 to be supplied with electric power from the battery 31. The air conditioner system 110 is driven by electric power supplied from the battery 31. The battery 31 supplies electric power to the multiple EPUs 50 as well as the air conditioner system 110. The air conditioner system 110 includes a compression cycle device 111. The compression cycle device 111 generates conditioned air from at least one of the inside air and the outside air through a compression cycle. In the air conditioner system 110, conditioned air may be generated by a refrigeration cycle or a heat pump cycle.

The compression cycle device 111 includes a refrigerant passage 120, a compressor 121, an outside heat exchanger 122, an outside fan 123, an inside heat exchanger 125, and a blower 126. In FIG. 2, the compressor 121 is designated as COMP, the outside heat exchanger 122 is designated as CON, the outside fan 123 is designated as FAN, the inside heat exchanger 125 is designated as EVA, and the blower 126 is designated as BLOW.

The refrigerant passage 120 is a flow path through which a refrigerant flows so as to circulate. The compressor 121 is an electric compressor. The compressor 121 compresses the refrigerant flowing through the refrigerant passage 120, and causes the compressed refrigerant to flow through the refrigerant passage 120. The compressor 121 is driven by electric power supplied from the battery 31.

The outside heat exchanger 122 is provided outside the cabin 15. The outside heat exchanger 122 exchanges heat between the refrigerant and the outside of the cabin 15. For example, the outside heat exchanger 122 exchanges heat between the refrigerant and the outside air. The outside fan 123 is a blower fan capable of blowing air. The outside fan 123 sends air so as to promote heat exchange of the refrigerant by the outside heat exchanger 122. The outside heat exchanger 122 functions as a condensing device when the air conditioner system 110 is in cooling operation. The condensing device may also be called as a condenser.

The inside heat exchanger 125 is provided inside the cabin 15. The inside heat exchanger 125 exchanges heat between the refrigerant and the conditioned air. For example, the inside heat exchanger 125 exchanges heat between the refrigerant and at least one of the taken-in inside air Air1, the taken-in outside air Air2, and the conditioned air Air3. The inside heat exchanger 125 is capable of changing temperature of the conditioned air Air3 by using the heat of the refrigerant. The blower 126 is a blowing fan capable of blowing air. The blower 126 supplies the conditioned air Air3 to the cabin 15. The conditioned air Air3 is blown out from the air conditioning outlet port 137 into the cabin 15 by the blower 126. The inside heat exchanger 125 functions as an evaporation device when the air conditioner system 110 is in cooling operation. The evaporation device may also be called as an evaporator.

The air conditioner system 110 has an intake switcher 127. The intake switcher 127 can adjust an amount of the inside air and an amount of the outside air taken into the air conditioner system 110. The intake switcher 127 is switchable between an inside air state, an outside air state, and a mixed state. When the intake switcher 127 is in the inside air state, of the taken-in inside air Air1 and the taken-in outside air Air2, only the taken-in inside air Air1 is taken into the air conditioner system 110. When the intake switcher 127 is in the outside air state, of the taken-in inside air Air1 and the taken-in outside air Air2, only the taken-in outside air Air2 is taken into the air conditioner system 110. When the intake switcher 127 is in the mixed state, both of the taken-in inside air Air1 and the taken-in outside air Air2 are taken into the air conditioner system 110.

The air conditioner system 110 includes an energy storage device 130. The energy storage device 130 stores thermal energy for air-conditioning the cabin 15. The thermal energy stored in the energy storage device 130 can be used to heat or cool the conditioned air. The air conditioner system 110 can heat or cool the cabin 15 using the thermal energy stored in the energy storage device 130 without driving the compression cycle device 111.

The energy storage device 130 has a heat storage unit 131 and a cold storage unit 132. The heat storage unit 131 is capable of storing heat. The heat storage unit 131 stores thermal energy for heating the cabin 15. The heat storage unit 131 has, for example, a high temperature section and a heat insulating section. In the heat storage unit 131, the high temperature section is kept warm by the heat insulating section. The cold storage unit 132 is capable of storing cold. The cold storage unit 132 stores thermal energy for cooling the cabin 15. The cold storage unit 132 has, for example, a low temperature section and a heat insulating section. In the cold storage unit 132, the low temperature section is kept cold by the heat insulating section. The energy storage device 130 may have a portion capable of storing both heat and cold.

The air conditioner system 110 includes an air conditioning unit 140. The air conditioning unit 140 includes a unit case 141. The unit case 141 houses multiple devices and instruments that constitute the air conditioner system 110. The air conditioning unit 140 has multiple devices and instruments unitized in the unit case 141. The air conditioning unit 140 is, for example, an HVAC (Heating, Ventilation, and Air Conditioning) unit. For example, the air conditioning unit 140 is provided with at least a portion of the air conditioning unit 140 embedded in an inner wall surface of the cabin 15.

The air conditioning unit 140 includes the inside heat exchanger 125, the blower 126, the intake switcher 127, the energy storage device 130, the inside air intake port 135, the outside air intake port 136, the air conditioning outlet port 137, and the like. The inside heat exchanger 125, the blower 126, the intake switcher 127, the energy storage device 130, and the like are accommodated in the unit case 141. The inside air intake port 135, the outside air intake port 136, and the air conditioning outlet port 137 are provided on the unit case 141. In the air conditioner system 110, the taken-in inside air Air1 and the taken-in outside air Air2 are introduced into an inside of the unit case 141. The conditioned air Air3 is generated in the air conditioning unit 140.

The air conditioner system 110 includes an air conditioning controller 150. The air conditioning controller 150 controls the air conditioner system 110. The air conditioning controller 150 corresponds to an air conditioning control device. The air conditioning controller 150 includes a processor 151, a memory 152, and a program 153. In FIG. 2, the intake switcher 127 is designated as ISP, the heat storage unit 131 is designated as HSD, and the cold storage unit 132 is designated as CSD. Further, the air conditioning controller 150 is designated as ACD, the processor 151 is designated as PRO, the memory 152 is designated as MEM, and the program 153 is designated as PG.

The air conditioning controller 150 is, for example, an ECU, and performs air conditioning control for air conditioning the eVTOL 10. The air conditioning controller 150 is a control device that controls the air conditioner system 110. For example, the air conditioning controller 150 controls the compression cycle device 111 and the intake switcher 127. The air conditioning controller 150 is constituted by a computer as its main component. The computer includes the processor 151, the memory 152, an input/output interface, and a bus connecting these. The memory 152 stores the program 153. The program 153 is an air conditioning control program for controlling air conditioning.

The processor 151 is hardware for arithmetic processing coupled to the memory 152. The processor 151 accesses the memory 152 to execute various processes such as an air conditioning control process and the like. The memory 152 is a storage medium that stores programs and the like. For example, the memory 152 is a non-transitory, tangible storage medium that non-temporarily stores computer-readable programs and data. The program 153 includes computer readable instructions that cause the processor 151 to perform various functions. The processor 151 is a processing unit that executes instructions contained in a stored program in the memory 152 to perform predetermined processing.

The air conditioning controller 150 is communicatively connected to the flight controller 40, the compression cycle device 111, and the intake switcher 127. The air conditioning controller 150 performs air conditioning control based on information from the flight controller 40, detection results from various sensors and the like. The air conditioning control includes control of the compression cycle device 111 and control of the intake switcher 127. The control of the intake switcher 127 includes control for switching between inside air circulation and outside air introduction.

The eVTOL 10 includes an inside air sensor 161, an outside air sensor 165, and an air pressure sensor 166 as various sensors. The sensors 161, 165, and 166 are communicatively connected to the air conditioning controller 150. The sensors 161, 165, and 166 output detection signals to the air conditioning controller 150. The air conditioning controller 150 acquires detection values of the sensors 161, 165, and 166 using the detection signals of the sensors 161, 165, and 166.

The inside air sensor 161 is a sensor that detects a state of the inside air. The inside air sensor 161 outputs a detection signal according to the state of the inside air. For example, the inside air sensor 161 detects a state of air in the cabin 15 as the state of the inside air. The inside air sensor 161 is provided in the cabin 15. The inside air sensor 161 is at least one sensor. The inside air sensor 161 includes an inside air temperature sensor, an inside air humidity sensor, a CO2 sensor, and the like.

The inside air temperature sensor is a sensor that detects inside air temperature. The inside air temperature sensor outputs a detection signal corresponding to inside air temperature. The inside air temperature is temperature of the inside air, e.g., temperature of the cabin 15. The inside air humidity sensor is a sensor that detects humidity of the inside air. The inside air humidity sensor outputs a detection signal corresponding to humidity of the inside air. The humidity of the inside air is humidity of the inside air, e.g., humidity of the cabin 15. The CO2 sensor is a sensor that detects CO2 concentration. The CO2 sensor outputs a detection signal corresponding to CO2 concentration in the cabin 15. The CO2 concentration is concentration of carbon dioxide.

The air pressure sensor 166 is a sensor that detects air pressure. The air pressure sensor 166 outputs a detection signal according to the air pressure. The outside air sensor 165 is a sensor that detects a state of the outside air. The outside air sensor 165 outputs a detection signal according to the state of the outside air. For example, the outside air sensor 165 detects atmospheric state around the airframe 11 as the state of the outside air. The outside air sensor 165 is provided outside the cabin 15. The outside air sensor 165 is at least one sensor. The outside air sensor 165 includes an outside air temperature sensor and an air quality sensor.

The outside air temperature sensor is a sensor that detects temperature of the outside air. The outside air temperature sensor outputs a detection signal according to temperature of the outside air. The temperature of the outside air is temperature regarding the outside air, e.g., the temperature outside the eVTOL 10. The air quality sensor is a sensor that detects air quality. The air quality sensor outputs a detection signal according to the air quality. The air quality sensor detects an air quality around the airframe 11 as a quality of the outside air. The air quality sensor can detect an air pollution state such as smog or the like. For example, an air quality sensor can detect a concentration of pollutants, such as particulate matter, in the air and the like. For example, the higher the concentration of pollutants, the worse the outside air quality and the more polluted the outside air is. Further, the air quality sensor can detect an odor of the outside air. For example, the stronger the odor, the worse the outside air quality and the more polluted the outside air is.

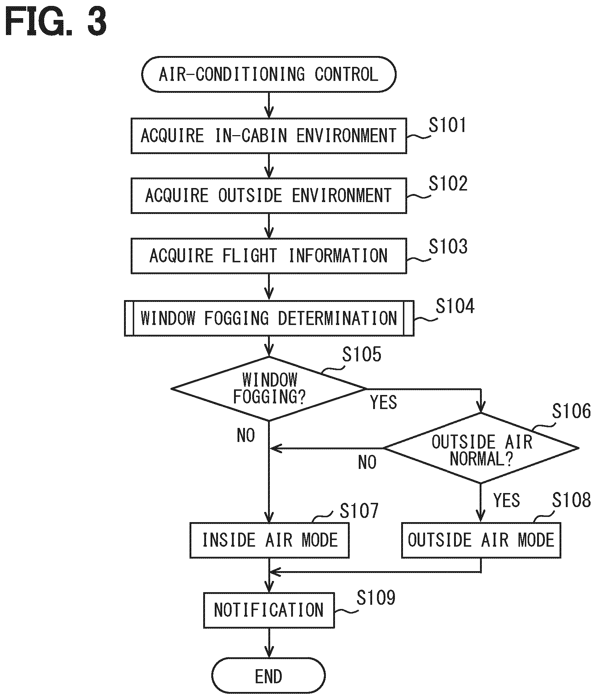

An air conditioning control process in the eVTOL 10 will be described with reference to a flowchart of FIG. 3. The air conditioning controller 150 repeatedly performs the air conditioning control process at a predetermined control period. The air conditioning controller 150 has a function of performing processing of each step of the air conditioning control process.

The air conditioning controller 150 acquires in-cabin environment information in step S101 shown in FIG. 3. The in-cabin environment information is information that indicates an internal environment of the eVTOL 10. The internal environment of the eVTOL 10 may also be referred to as the in-cabin environment. The in-cabin environment information corresponds to internal environment information. The in-cabin environment information includes information indicating an environment of the cabin 15. The in-cabin environment information includes the inside air temperature and the humidity, the CO2 concentration, and the presence or absence of occupants in the cabin 15. The air conditioning controller 150 acquires inside air temperature, inside air humidity, and CO2 concentration using a detection signal by using the inside air sensor 161. The air conditioning controller 150 acquires information including the presence or absence of occupants and the number of occupants from the flight controller 40, and the like. Further, the air conditioning controller 150 may also acquire the inside air temperature, the inside air humidity, and the CO2 concentration from the flight controller 40.

In step S102, the air conditioning controller 150 acquires outside environment information. The outside environment information is information on external environment of the eVTOL 10. The external environment of the eVTOL 10 may also be referred to as the outside environment. The outside environment information corresponds to external environment information. The outside environment information includes the outside air temperature, the air pressure and the like. The air conditioning controller 150 acquires the outside air temperature, the outside air quality, the odor of the outside air, the air pressure, and the like, using detection signals from the outside air sensor 165 and the air pressure sensor 166. Further, the air conditioning controller 150 may acquire the outside environment information from the flight controller 40 or the like.

In step S103, the air conditioning controller 150 acquires flight information. The flight information is information that indicates a flight state of the eVTOL 10. The flight information includes information regarding vertical takeoff, vertical landing, lift, altitude, ascent, descent, flight schedule and the like of the eVTOL 10. The air conditioning controller 150 acquires the flight information from the flight controller 40 and the like.

The air conditioning controller 150 performs a window fogging determination process in step S104. In the window fogging determination process, it is determined whether or not fogging will occur on the window 16. The fogging of the window 16 occurs due to condensation on the window panel, or the like. Regarding the window 16, condensation forms on the window panel, causing the window panel to become fogged. At least one of internal fogging and external fogging may occur on the window 16. The internal fogging has fogging on an inside surface of the window 16. For example, in case of the internal fogging, condensation forms on a surface of the window panel on a cabin 15 side or the like, causing fogging. The external fogging has fogging on an outside surface of the window 16. For example, in case of the external fogging, condensation forms on an outside surface of the window panel, causing fogging. The fogging of the window 16 may also be referred to as window fogging.

In the window fogging determination process, the air conditioning controller 150 determines whether or not a window fogging condition is satisfied, for determining whether or not fogging will occur on the window 16. The window fogging condition is a condition under which fogging occurs on the window 16. In the window fogging determination process, a determination is made individually for each of multiple window fogging conditions. The air conditioning controller 150 determines that the window 16 is likely to have fogging when at least one window fogging condition is satisfied. The air conditioning controller 150 determines whether or not the window fogging condition is satisfied, thereby determining the likelihood of having window fogging. The function of performing the process of step S104 in the air conditioning controller 150 corresponds to a window fogging determination unit.

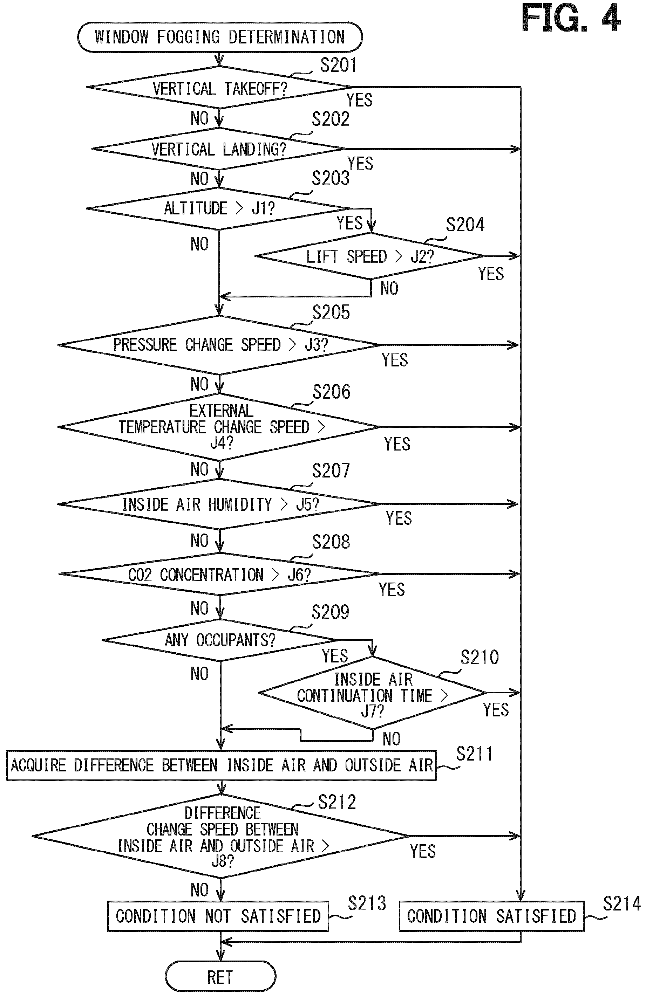

The window fogging determination process will be described with reference to a flowchart of FIG. 4. In steps S201 to S204 of the window fogging determination process, the air conditioning controller 150 uses the flight information to determine whether or not the window fogging condition is satisfied. The function of performing the processes in steps S201 to S204 in the air conditioning controller 150 corresponds to a flight determination unit.

In step S201, the air conditioning controller 150 uses the flight information to determine whether the eVTOL 10 performs a vertical takeoff. When the eVTOL 10 performs a vertical takeoff, the air conditioning controller 150 determines that a window fogging condition is satisfied. The vertical takeoff of the eVTOL 10 corresponds to a fogged window condition. The vertical takeoff of the eVTOL 10 may include a situation of preparing for vertical takeoff, a situation of currently performing a vertical takeoff, and the like. The function of performing the process of step S201 in the air conditioning controller 150 corresponds to a takeoff determination unit.

In step S202, the air conditioning controller 150 uses the flight information to determine whether or not the eVTOL 10 will perform a vertical landing. When the eVTOL 10 performs a vertical landing, the air conditioning controller 150 determines that a window fogging condition is satisfied. The vertical landing of the eVTOL 10 corresponds to a window fogging condition. The vertical landing of the eVTOL 10 includes a situation of preparing for a vertical landing, a situation of currently performing a vertical landing, and the like. The function of performing the process of step S202 in the air conditioning controller 150 corresponds to a landing determination unit.

In step S203, the air conditioning controller 150 determines whether a flight altitude P1 is higher than a first determination value J1. The flight altitude P1 is an altitude at which the eVTOL 10 is flying. The air conditioning controller 150 acquires the flight altitude P1 from the flight information. The flight altitude P1 is included in the flight information. The first determination value J1 is set to a value indicating that the flight altitude P1 is so high that the window 16 becomes fogged. The first determination value J1 is set to, for example, several tens of meters to several hundreds of meters. The first determination value J1 is a value that is determined in advance through testing or the like, and is stored in the memory 152 or the like.

When the flight altitude P1 is higher than the first determination value J1, the air conditioning controller 150 proceeds to step S204. In step S204, the air conditioning controller 150 determines whether a lift speed P2 is faster than a second determination value J2. The air conditioning controller 150 acquires the lift speed P2 from the flight information such as lift information. The lift speed P2 is included in the flight information. The lift speed P2 is a speed at which the eVTOL 10 lifts. The lift speed P2 is a distance that eVTOL 10 moves in an up and down direction per unit time. The lift speed P2 includes an ascent speed and a descent speed. The ascent speed is a speed at which the eVTOL 10 ascends. The descent speed is a speed at which the eVTOL 10 descends. The second determination value J2 is set to a value indicating that the lift speed P2 is so fast that the window 16 becomes fogged. The second determination value J2 is a value that is determined in advance through testing or the like, and is stored in the memory 152 or the like.

When the flight altitude P1 is higher than the first determination value J1 and the lift speed P2 is faster than the second determination value J2, the air conditioning controller 150 determines that the window fogging condition is satisfied. The flight altitude P1 being higher than the first determination value J1 and the lift speed P2 being faster than the second determination value J2 correspond to the window fogging condition. The flight altitude P1 and the lift speed P2 are parameters related to the window fogging condition, and correspond to a window fogging parameter. The first determination value J1 and the second determination value J2 are determination values for determining whether or not the window fogging condition is satisfied, and respectively correspond to a window fogging determination value.

The air conditioning controller 150 compares the flying altitude P1 with the first determination value J1. The result of a determination as to whether the flight altitude P1 is higher than the first determination value J1 corresponds to a result of comparison between a window fogging parameter and a window fogging determination value. The air conditioning controller 150 compares the lift speed P2 with the second determination value J2. The result of a determination as to whether the lift speed P2 is faster than the second determination value J2 corresponds to a result of comparison between a window fogging parameter and a window fogging determination value. The function of performing the processes in steps S203 and S204 in the air conditioning controller 150 corresponds to a parameter determination unit.

When the window fogging condition is satisfied in steps S201 to S204, the air conditioning controller 150 proceeds to step S214, and performs a condition satisfaction process. In the condition satisfaction process, a fact that the window fogging condition is satisfied is stored in the memory 152 or the like. For example, the air conditioning controller 150 sets a condition satisfied flag in the memory 152 or the like, which indicates that the window fogging condition is satisfied. Further, the air conditioning controller 150 clears a condition un-satisfied flag, which will be described later.

The air conditioning controller 150 may determine whether the window fogging condition is satisfied individually for each of steps S203 and S204. For example, when the flying altitude P1 is higher than the first determination value J1 in step S203, the air conditioning controller 150 determines that the window fogging condition is satisfied, and performs the condition satisfaction process in step S214. Further, in step S204, when the lift speed P2 is faster than the second determination value J2, the air conditioning controller 150 determines that the window fogging condition is satisfied, and performs the condition satisfaction process in step S214.

In step S201, when the eVTOL 10 performs vertical takeoff, the air conditioning controller 150 performs the condition satisfaction process in step S214. In step S202, when the eVTOL 10 performs vertical landing, the air conditioning controller 150 performs the condition satisfaction process in step S214. In steps S203 and S204, when the flying altitude P1 is higher than the first determination value J1 and the lift speed P2 is faster than the second determination value J2, the air conditioning controller 150 performs the condition satisfaction process in step S214.

When the window fogging conditions are not satisfied in steps S201 to S204, the air conditioning controller 150 determines in steps S205 and S206 whether or not the window fogging condition is satisfied using the outside environment information. The function of performing the processes of steps S205 and S206 in the air conditioning controller 150 corresponds to an outside determination unit.

In step S205, the air conditioning controller 150 determines whether an air pressure change rate P3 is faster than a third determination value J3. When the eVTOL 10 is flying and moving, the air pressure outside the eVTOL 10 may change as the eVTOL 10 moves. The air pressure change rate P3 is a rate at which the air pressure outside of the eVTOL 10 changes. For example, the air pressure change rate P3 is an amount of change in the air pressure outside the eVTOL 10 per unit time. The air conditioning controller 150 acquires the air pressure from the outside environment information, and calculates the air pressure change rate P3 using such air pressure. The air pressure change rate P3 is included in the outside environment information. The third determination value J3 is set to a value indicating that the air pressure changes in a short period of time to an extent that the window 16 becomes fogged. In other words, the third determination value J3 is set to a value at which the air pressure change rate P3 indicates that the flight altitude P1 is changing in a short period of time to an extent that the window 16 becomes fogged. The third determination value J3 is a value that is determined in advance through testing or the like, and is stored in the memory 152 or the like.

When the air pressure change rate P3 is faster than the third determination value J3, the air conditioning controller 150 determines that the window fogging condition is satisfied. The air pressure change rate P3 being faster than the third determination value J3 corresponds to a window fogging condition. The air pressure change rate P3 is a parameter related to the window fogging condition, and corresponds to a window fogging parameter. The third determination value J3 is a determination value for determining whether or not the window fogging condition is satisfied, and corresponds to a window fogging determination value. The air conditioning controller 150 compares the air pressure change rate P3 with the third determination value J3. The result of a determination as to whether the air pressure change rate P3 is faster than the third determination value J3 corresponds to a result of comparison between the window fogging parameter and the window fogging determination value. The function of performing the process of step S205 in the air conditioning controller 150 corresponds to a parameter determination unit.

In step S206, the air conditioning controller 150 determines whether an outside air temperature change rate P4 is faster than a fourth determination value J4. When the eVTOL 10 is flying and moving, the outside air temperature may change as the eVTOL 10 moves. The outside air temperature change rate P4 is a rate at which the outside air temperature outside the eVTOL 10 changes. For example, the outside air temperature change rate P4 is an amount of change in the outside air temperature outside the eVTOL 10 per unit time. The air conditioning controller 150 acquires the outside air temperature from the outside environment information, and calculates the outside air temperature change rate P4 by using the outside air temperature. The outside air temperature change rate P4 is included in the outside environment information. The fourth determination value J4 is set to a value indicating that the outside air temperature changes in a short period of time to an extent that the window 16 becomes fogged. In other words, the fourth determination value J4 is set to a value at which the outside air temperature change rate P4 indicates that the flying altitude P1 is changing in a short period of time to an extent that the window 16 becomes fogged. The fourth determination value J4 is a value that is determined in advance through testing or the like, and is stored in the memory 152 or the like.

When the outside air temperature change rate P4 is faster than the fourth determination value J4, the air conditioning controller 150 determines that the window fogging condition is satisfied. The outside air temperature change rate P4 being faster than the fourth determination value J4 corresponds to a window fogging condition. The outside air temperature change rate P4 is a parameter related to the window fogging condition, and corresponds to a window fogging parameter. The fourth determination value J4 is a determination value for determining whether or not the window fogging condition is satisfied, and corresponds to a window fogging determination value. The air conditioning controller 150 compares the outside air temperature change rate P4 with the fourth determination value J4. The result of a determination as to whether the outside air temperature change rate P4 is faster than the fourth determination value J4 corresponds to a result of comparison between the window fogging parameter and the window fogging determination value. The function of performing the process of step S206 in the air conditioning controller 150 corresponds to a parameter determination unit.

When the window fogging condition is satisfied in steps S205 and S206, the air conditioning controller 150 performs the condition satisfaction process in step S214. For example, when the air pressure change rate P3 is faster than the third determination value J3 in step S205, the air conditioning controller 150 performs the condition satisfaction process in step S214. When the outside air temperature change rate P4 is faster than the fourth determination value J4 in step S206, the air conditioning controller 150 performs the condition satisfaction process in step S214.

When the window fogging condition is not satisfied in steps S201 to S206, the air conditioning controller 150 determines whether the window fogging condition is satisfied by using the in-cabin environment information in steps S207 to S210. The function of performing the processes of steps S207 to S210 in the air conditioning controller 150 corresponds to an inside determination unit.

In step S207, the air conditioning controller 150 determines whether an inside air humidity P5 is higher than a fifth determination value J5. The air conditioning controller 150 acquires the inside air humidity P5 from the in-cabin environment information. The inside air humidity P5 is included in the in-cabin environment information. The fifth determination value J5 is set to a value indicating that the inside air humidity P5 is so high that the window 16 becomes fogged. The fifth determination value J5 is a value that is determined in advance through testing or the like, and is stored in the memory 152 or the like.

When the inside air humidity P5 is higher than the fifth determination value J5, the air conditioning controller 150 determines that the window fogging condition is satisfied. The inside air humidity P5 being higher than the fifth determination value J5 corresponds to the window fogging condition. The inside air humidity P5 is a parameter related to the window fogging condition, and corresponds to the window fogging parameter. The fifth determination value J5 is a determination value for determining whether or not the window fogging condition is satisfied, and corresponds to a window fogging determination value. The air conditioning controller 150 compares the inside air humidity P5 with the fifth determination value J5. The result of a determination as to whether the inside air humidity P5 is higher than the fifth determination value J5 corresponds to a result of comparison between a window fogging parameter and a window fogging determination value. The function of performing the process of step S207 in the air conditioning controller 150 corresponds to a parameter determination unit.

In step S208, the air conditioning controller 150 determines whether a CO2 concentration P6 is higher than a sixth determination value J6. The air conditioning controller 150 acquires the CO2 concentration P6 from the in-cabin environment information. The CO2 concentration P6 is included in the in-cabin environment information. In the eVTOL 10, when there is insufficient outside air being introduced into the cabin 15, the CO2 concentration P6 is likely to become high. Further, when there is insufficient outside air being introduced into the cabin 15, the window 16 is likely to have fogging. Therefore, it can be said that the higher the CO2 concentration P6, the more likely the window 16 has fogging. The sixth determination value J6 is set to a value that indicates that the CO2 concentration P6 is so high that the window 16 becomes fogged. The sixth determination value J6 is also a value that indicates that the outside air introduction into the cabin 15 is insufficient to an extent that fogging occurs on the window. The sixth determination value J6 is a value that is determined in advance through testing or the like, and is stored in the memory 152 or the like.

When the CO2 concentration P6 is higher than the sixth determination value J6, the air conditioning controller 150 determines that the window fogging condition is satisfied. The CO2 concentration P6 being higher than the sixth determination value J6 corresponds to a window fogging condition. The CO2 concentration P6 is a parameter related to the window fogging condition, and corresponds to a window fogging parameter. The sixth determination value J6 is a determination value for determining whether or not the window fogging condition is satisfied, and corresponds to a window fogging determination value. The air conditioning controller 150 compares the CO2 concentration P6 with the sixth determination value J6. The result of a determination as to whether the CO2 concentration P6 is higher than the sixth determination value J6 corresponds to a result of comparison between the window fogging parameter and the window fogging determination value. The function of performing the process of step S208 in the air conditioning controller 150 corresponds to a parameter determination unit.

In step S209, the air conditioning controller 150 determines whether or not the eVTOL 10 has an occupant on board. When the eVTOL 10 has an occupant on board, the air conditioning controller 150 proceeds to step S210. In step S210, the air conditioning controller 150 determines whether an inside air continuation time P7 is longer than a seventh determination value J7. The inside air continuation time P7 is a time during which the air conditioner system 110 continues to circulate the inside air. The inside air continuation time P7 is a duration of time during which the intake switcher 127 is in the inside air state. In the eVTOL 10, when the inside air is circulated without introducing outside air for a long period of time, the window 16 is likely to become fogged due to the breath of the occupants, and the like. The seventh determination value J7 is set to a value indicating that the inside air continuation time P7 is so long that fogging of the window 16 occurs. The seventh determination value J7 is a value that is determined in advance through testing or the like, and is stored in the memory 152 or the like.

When the eVTOL 10 has an occupant on board and the inside air continuation time P7 is longer than the seventh determination value J7, the air conditioning controller 150 determines that the window fogging condition is satisfied. The window fogging condition corresponds to a condition in which the eVTOL 10 has an occupant on board and the inside air continuation time P7 is longer than the seventh determination value J7. The inside air continuation time P7 is a parameter related to the window fogging condition, and corresponds to a window fogging parameter. The seventh determination value J7 is a determination value for determining whether or not the window fogging condition is satisfied, and corresponds to a window fogging determination value. The air conditioning controller 150 compares the inside air continuation time P7 with the seventh determination value J7. The result of determination as to whether the inside air continuation time P7 is longer than the seventh determination value J7 corresponds to a result of comparison between the window fogging parameter and the window fogging determination value. The function of performing the processes of steps S209 and S210 in the air conditioning controller 150 corresponds to a parameter determination unit.

When the window fogging condition is satisfied in steps S207 to S210, the air conditioning controller 150 performs a condition satisfaction process in step S214. For example, when the inside air humidity P5 is higher than the fifth determination value J5 in step S207, the air conditioning controller 150 performs the condition satisfaction process in step S214. When the CO2 concentration P6 is higher than the sixth determination value J6 in step S208, the air conditioning controller 150 performs the condition satisfaction process in step S214. In steps S209 and S210, when the eVTOL 10 has an occupant on board and the inside air continuation time P7 is longer than the seventh determination value J7, the air conditioning controller 150 performs the condition satisfaction process in step S214.

The air conditioning controller 150 may determine whether the window fogging condition is satisfied individually for each of steps S209 and S210. For example, in step S209, when the eVTOL 10 has an occupant on board, the air conditioning controller 150 determines that the window fogging condition is satisfied, and performs the condition satisfaction process in step S214. The air conditioning controller 150 may determine whether the number of occupants is greater than a predetermined number, and, may determine that the window fogging condition is satisfied when the number of occupants is greater than a predetermined number. The number of occupants may also be referred to as the number of passengers. Further, in step S210, when the inside air continuation time P7 is longer than the seventh determination value J7, the air conditioning controller 150 determines that the window fogging condition is satisfied, and performs the condition satisfaction process in step S214.

When the window fogging condition is not satisfied in steps S201 to S210, the air conditioning controller 150 proceeds to step S211, and acquires an inside/outside difference P8a. The inside/outside difference P8a is a difference between inside air temperature and outside air temperature. The air conditioning controller 150 acquires the inside air temperature and the outside air temperature from the in-cabin environment information and the outside environment information, and calculates the inside/outside air temperature difference P8a by using the inside air temperature and the outside air temperature.

In step S212, the air conditioning controller 150 determines whether an inside/outside difference change speed P8 is faster than an eighth determination value J8. When the eVTOL 10 is flying and moving, the inside/outside difference P8a may change as the eVTOL 10 moves due to changes in the outside air temperature as the eVTOL 10 moves, or the like. The inside/outside difference change speed P8 is a speed at which the inside/outside difference P8a changes. For example, the inside/outside difference change speed P8 is an amount of change in the inside/outside difference P8a per unit time. The air conditioning controller 150 calculates the inside/outside difference change speed P8 by using the inside/outside difference P8a. In the eVTOL 10, when the inside/outside difference P8a increases or decreases in a short period of time, the window 16 is likely to become fogged. For example, when the outside air temperature drops relative to the inside air temperature in a short period of time due to an ascent of the eVTOL 10 in a short period of time, internal fogging of the window 16 is likely to occur. The eighth determination value J8 is set to a value indicating that the inside/outside difference change rate P8 is so fast that the window 16 becomes fogged. The eighth determination value J8 is a value that is determined in advance through testing or the like, and is stored in the memory 152 or the like.

When the inside/outside difference change speed P8 is higher than the eighth determination value J8, the air conditioning controller 150 determines that the window fogging condition is satisfied. The inside/outside difference change rate P8 being higher than the eighth determination value J8 corresponds to a window fogging condition. The inside/outside difference change rate P8 is a parameter related to the window fogging condition, and corresponds to a window fogging parameter. The eighth determination value J8 is a determination value for determining whether or not the window fogging condition is satisfied, and corresponds to a window fogging determination value. The air conditioning controller 150 compares the inside/outside difference change speed P8 with the eighth determination value J8. The result of a determination as to whether the inside/outside difference change rate P8 is faster than the eighth determination value J8 corresponds to a result of comparison between the window fogging parameter and the window fogging determination value. The function of performing the process of step S212 in the air conditioning controller 150 corresponds to a parameter determination unit.

The inside/outside difference change speed P8 is included in inside/outside difference information indicating a change mode of the inside/outside difference P8a. The air conditioning controller 150 determines whether or not the window fogging condition is satisfied by using inside/outside difference information such as the inside/outside difference change rate P8. The inside/outside difference information includes the inside/outside difference change rate P8, as well as an amount of change in the inside/outside difference P8a over a predetermined time. The function of performing the process of step S212 in the air conditioning controller 150 corresponds to an inside/outside determination unit.

When the window fogging condition is satisfied in step S212, the air conditioning controller 150 performs the condition satisfaction process in step S214. For example, when the inside/outside difference change rate P8 is greater than the eighth determination value J8 in step S212, the air conditioning controller 150 performs the condition satisfaction process in step S214.

When the window fogging condition is not satisfied in steps S201 to S212, the air conditioning controller 150 proceeds to step S213. In step S213, the air conditioning controller 150 performs a condition un-satisfied process. In the condition un-satisfied process, a fact that the window fogging condition is not satisfied is stored in the memory 152 or the like. For example, the air conditioning controller 150 sets a condition un-satisfied flag in the memory 152 or the like, which indicates that the window fogging condition is not satisfied. Further, the air conditioning controller 150 clears the condition satisfied flag.

Returning to FIG. 3, after the window fogging determination process in step S104, the air conditioning controller 150 proceeds to step S105. In step S105, the air conditioning controller 150 determines whether or not fogging will occur on the window 16. That is, the air conditioning controller 150 determines whether or not the window fogging condition is satisfied in the window fogging determination process. For example, the air conditioning controller 150 determines whether or not the condition satisfied flag or the condition un-satisfied flag is set. When the condition un-satisfied flag is set, the air conditioning controller 150 determines that the window fogging condition is not satisfied. When the window fogging condition is not satisfied, the air conditioning controller 150 determines that fogging on the window 16 is unlikely to occur, and proceeds to step S107.

The air conditioning controller 150 performs an inside air mode process in step S107. In the inside air mode process, an operation mode of the air conditioner system 110 is set to an inside air mode. The operation mode is an operation method of the air conditioner system 110. The inside air mode is an operation mode in which the air conditioner system 110 performs inside air circulation. The inside air mode may also be called as an in-cabin circulation mode. The inside air mode is one of the inside air circulation functions that allows the air conditioner system 110 to circulate the inside air in the eVTOL 10. In the inside air mode, the inside air including the taken-in inside air Air1 circulates between the cabin 15 and the air conditioner system 110. That is, in the inside air mode, inside air circulates in the eVTOL 10. In the inside air mode, the intake switcher 127 is set to the inside air state. In the inside air mode, the outside air introduction is stopped.

After step S107, the air conditioning controller 150 proceeds to step S109, and performs a notification process. In the notification process, the operation mode of the air conditioner system 110 is notified. In the notification process, the operation mode is notified to the pilot or the occupant by images, sounds, or the like. For example, when the operation mode is set to the inside air mode in step S107, the air conditioning controller 150 provide notification that the operation mode is the inside air mode by performing the notification process.

In step S105, when the condition satisfied flag is set, the air conditioning controller 150 determines that the window fogging condition is satisfied. When the window fogging condition is satisfied, the air conditioning controller 150 determines that fogging on the window 16 is likely to occur, and proceeds to step S106. The air conditioning controller 150 determines in step S106 whether the outside air is normal. For example, the air conditioning controller 150 determines whether the quality and odor of the outside air are within a normal range. The air conditioning controller 150 determines that the outside air is normal when the quality and odor of the outside air are within the normal range. For example, when the concentration of pollutants is sufficiently low, the air conditioning controller 150 determines that the outside air is not polluted and that the outside air quality is within the normal range.

When fogging on the window 16 is likely to occur and the outside air is normal, the air conditioning controller 150 proceeds to step S108, and performs an outside air mode process. In the outside air mode process, the operation mode of the air conditioner system 110 is set to an outside air mode. The outside air mode is an operation mode in which the air conditioner system 110 introduces outside air. The outside air mode may also be called as an outside air introduction mode. The outside air mode is one of the outside air introduction functions by which the air conditioner system 110 introduces outside air into the inside of the eVTOL 10. In the outside air mode, taken-in outside air Air2 is introduced into the cabin 15. That is, in the outside air mode, outside air is introduced into an inside of the eVTOL 10. In the outside air mode, the intake switcher 127 is set to the outside air state. In the outside air mode, the inside air circulation is stopped.

For example, when the operation mode is switched from the inside air mode to the outside air mode, the air conditioning controller 150 switches the intake switcher 127 from the inside air state to the outside air state. In such case, an amount of the taken-in outside air Air2 introduced into the cabin 15 increases. The function of performing the process of step S108 in the air conditioning controller 150 corresponds to an outside air increase unit and an outside air mode unit.

In case that fogging on the window 16 is likely to occur, the outside air introduction makes the window 16 less likely to fog. Further, when the window 16 is fogged, the outside air introduction can easily defog the window 16. For example, when the inside air humidity P5 is higher than the fifth determination value J5, the outside air is introduced to make the inside air humidity P5 lower than the fifth determination value J5, thereby suppressing window fogging. Further, when the CO2 concentration P6 is higher than the sixth determination value J6, the CO2 concentration P6 is reduced by introducing outside air, and the inside air humidity P5 is reduced, thereby suppressing window fogging. Further, when the eVTOL 10 has an occupant on board and the inside air continuation time P7 is longer than the seventh determination value J7, the outside air introduction reduces the inside air humidity P5, thereby suppressing window fogging.

In the eVTOL 10, temperature difference between the inside and outside of the aircraft is believed to be the biggest factor in causing window fogging. In the present embodiment, as parameters relating to temperature difference between the inside and outside of the aircraft, the flight altitude P1, the lift speed P2, the air pressure change rate P3, the outside air temperature change rate P4, the inside/outside difference P8a, the inside/outside difference change rate P8 and the like are used. Even when the window fogging is caused due to the temperature difference between the inside and outside of the aircraft, the outside air introduction prevents the window from fogging.

For example, when the inside/outside difference change rate P8 is faster than the eighth determination value J8, the outside air introduction makes the inside/outside difference change rate P8 lower than the eighth determination value J8, thereby suppressing window fogging. Further, when the eVTOL 10 performs vertical takeoff or vertical landing, the inside/outside difference change rate P8 is reduced by the outside air introduction, thereby suppressing window fogging. Even when the flight altitude P1 is higher than the first determination value J1 and the lift speed P2 is faster than the second determination value J2, the outside air introduction reduces the inside/outside difference change rate P8, thereby suppressing window fogging. When the air pressure change rate P3 is faster than the third determination value J3, and when the outside air temperature change rate P4 is faster than the fourth determination value J4, the outside air introduction reduces the inside/outside difference change rate P8, thereby suppressing window fogging.

When the eVTOL 10 performs vertical takeoff, it is considered that the window fogging is likely to occur because the inside/outside difference change rate P8 becomes faster as the eVTOL 10 ascends in a short period of time. In contrast, when the eVTOL 10 performs vertical takeoff, even when the flight altitude P1 increases steeply, window fogging is suppressed by, for example, slowing down the inside/outside difference change rate P8 by the outside air introduction. Further, when the eVTOL 10 performs vertical landing, it is considered that the window fogging is likely to occur due to the inside/outside difference change rate P8 becoming faster as the eVTOL 10 descends in a short period of time. In contrast, when the eVTOL 10 performs vertical landing, even when the flight altitude P1 drops suddenly, window fogging is suppressed by, for example, slowing down the inside/outside difference change rate P8 by the outside air introduction.

After step S108, the air conditioning controller 150 proceeds to step S109, and performs the notification process. For example, when the operation mode is set to the outside air mode, the air conditioning controller 150 notifies that the operation mode is the outside air mode by performing the notification process.

In steps S105 and S106, when the window 16 is likely to become fogged, but the outside air is not normal, the air conditioning controller 150 proceeds to step S107, and performs the inside air mode process. In such case, regulating the introduction of polluted air into the cabin 15 takes precedence over suppressing window fogging. The air conditioning controller 150 regulates pollutants from being introduced into the cabin 15 along with the outside air. Thereafter, the air conditioning controller 150 proceeds to step S107, and performs the inside air mode process. In the inside air mode process, notification is performed regarding (a) fogging on the window 16 is likely to occur, (b) outside air is not being introduced, (c) outside air is not normal, and so on.

According to the present embodiment described so far, when the window fogging condition in the eVTOL 10 is satisfied, the taken-in outside air Air2 introduced into the inside of the eVTOL 10 is increased. In such configuration, the taken-in outside air Air2 can prevent the window 16 of the eVTOL 10 from fogging. Further, even when fogging occurs on the window 16 of the eVTOL 10, the fogging can be reduced by the taken-in outside air Air2. Therefore, even when the eVTOL 10 is not provided with a dedicated device for heating the window 16, the outside air introduction function of the air conditioner system 110 can be utilized to prevent the window 16 from fogging and impairing the visibility of the pilot. In such manner, the air conditioner system 110, the air conditioning controller 150, and the program 153 can improve the safety of the eVTOL 10.

According to the present embodiment, the operation mode of the air conditioner system 110 is switched from the inside air mode to the outside air mode, so that the taken-in outside air Air2 introduced into the eVTOL 10 increases. In such configuration, fogging of the window 16 is suppressible by utilizing the outside air mode, which is one of the outside air introduction functions. Further, in the outside air mode, a sufficient amount of the taken-in outside air Air2 introduced into the cabin 15 is ensured, so that even when fogging of the window occurs, the fogging can be quickly eliminated.

According to the present embodiment, flight information such as the flight altitude P1, in-cabin environment information such as the inside air humidity P5, and outside air environment information such as the outside air temperature change rate P4 are used to determine whether the window fogging condition is satisfied. Therefore, in case that the flight state of the eVTOL 10 affects the likelihood of window fogging, the accuracy of estimating the occurrence of window fogging is improvable by using the flight information. Further, when the in-cabin environment of the eVTOL 10 affects the likelihood of window fogging, the accuracy of estimating the occurrence of window fogging is improvable by using the in-cabin environment information. Further, in case that the outside environment outside the eVTOL 10 affects the likelihood of window fogging, the accuracy of estimating the occurrence of window fogging is improvable by using the outside environment information. Therefore, the flight information, the in-cabin environment information, and the outside environment information can be used to prevent a situation in which the outside air introduction is prevented from occurring even though window fogging is likely to occur.

According to the present embodiment, the inside/outside difference information such as the inside/outside difference change rate P8 is used to determine whether or not the window fogging condition is satisfied. Therefore, in case that the manner in which the inside/outside difference P8a changes is likely to affect the likelihood of window fogging, the accuracy of estimating the occurrence of window fogging is improvable by using the inside/outside difference information. Therefore, the inside/outside difference information can prevent a situation in which the outside air introduction is prevented from occurring even though the window are prone to fogging.

According to the present embodiment, the air conditioning controller 150 determines that the window fogging condition is satisfied when the eVTOL 10 performs vertical takeoff. In such configuration, outside air injection occurs when the eVTOL 10 performs vertical takeoff. Therefore, the outside air introduction prevents the window from fogging due to an increase in the inside/outside difference change rate P8 that accompanies vertical takeoff of the eVTOL 10. Therefore, during vertical takeoff of the eVTOL 10, it is possible to reliably prevent the pilot's visibility from being reduced due to window fogging.

According to the present embodiment, the air conditioning controller 150 determines that the window fogging condition is satisfied when the eVTOL 10 makes vertical landing. In such configuration, outside air injection occurs when eVTOL 10 makes vertical landing. Therefore, the outside air introduction prevents the window from fogging due to an increase in the inside/outside difference change rate P8 that accompanies the vertical landing of the eVTOL 10. Therefore, when the eVTOL 10 makes a vertical landing, it is possible to reliably prevent the pilot's visibility from being reduced due to window fogging.

According to the present embodiment, the air conditioning controller 150 determines whether or not the window fogging condition is satisfied by using the result of comparing a window fogging parameter such as the outside air temperature change rate P4 with a window fogging determination value such as the fourth determination value J4. In such configuration, the window fogging determination value is set to a highly accurate value through testing or the like, thereby improving the accuracy of the comparison result between the window fogging parameter and the window fogging determination value. Therefore, the accuracy of determining whether or not the window fogging condition is satisfied is improvable by using the window fogging determination value. Therefore, the window fogging parameter and the window fogging determination value can prevent a situation in which the outside air introduction is prevented from occurring even though window fogging is likely to occur.

### <Second Embodiment>

In the first embodiment, the predetermined first determination value J1 or the like is used as the parameter determination value for determining the window fogging condition. In contrast, in the second embodiment, a corrected value acquired by correcting a first determination value J1, or the like is used as a parameter determination value for determining the window fogging condition. The configurations, operations, and effects of the second embodiment that are not specifically described are similar to those of the first embodiment. In the second embodiment, the differences from the first embodiment will be mainly described.

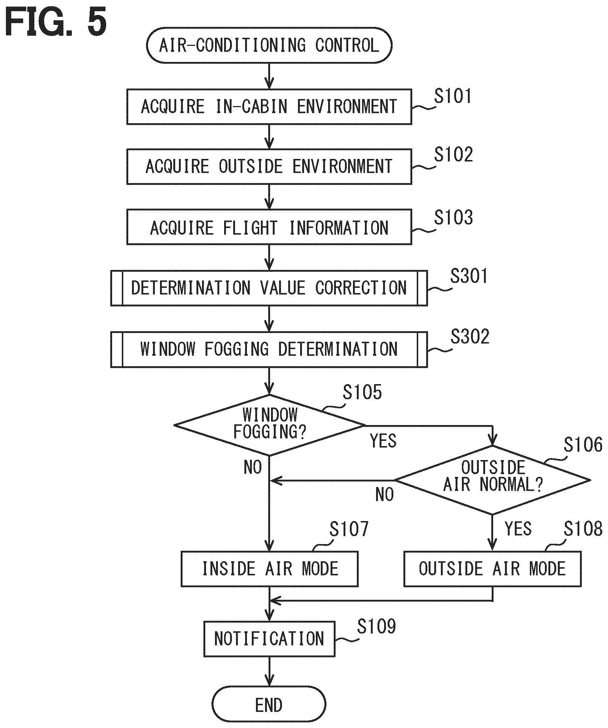

An air conditioning controller 150 performs an air conditioning control process in the same manner as in the first embodiment. In the present embodiment, the air conditioning control process will be described with reference to a flowchart of FIG. 5. The air conditioning controller 150 acquires in-cabin environment information, outside environment information, and flight information in steps S101 to S103, similarly to the first embodiment.

The air conditioning controller 150 performs a determination value correction process in step S301 shown in FIG. 5. The air conditioning controller 150 corrects a reference determination value as the determination value correction process. The reference determination value is a value related to a window fogging condition. The reference determination value is a value that is determined in advance through testing or the like, and is stored in a memory 152 or the like. For example, the reference determination values are a first determination value J1 to an eighth determination value J8. The air conditioning controller 150 corrects the reference determination value using a correction parameter. The correction parameter includes inside/outside difference information, the number of occupants, outside environment information, and the like. The air conditioning controller 150 corrects the first determination value J1 to the eighth determination value J8 to acquire a first correction value J1c to an eighth correction value J8c. In the present embodiment, the correction values J1c to J8c are window fogging determination values. The function of performing the process of step S301 in the air conditioning controller 150 corresponds to a determination value correction unit.

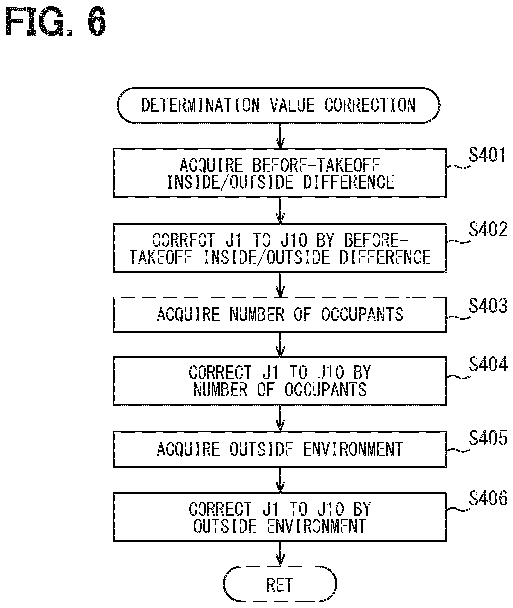

The determination value correction process will be described with reference to a flowchart shown in FIG. 6. The air conditioning controller 150 acquires the inside/outside difference P8b before takeoff in step S401. The before-takeoff inside/outside difference P8b is a temperature difference between the inside air and the outside air before the eVTOL 10 takes off. In other words, the before-takeoff inside/outside difference P8b is an inside/outside difference P8a before takeoff. For example, the before-takeoff inside/outside difference P8b is an inside/outside difference P8a immediately before takeoff or an inside/outside difference P8a during takeoff preparation. The before-takeoff inside/outside difference P8b corresponds to a temperature difference, and the before-takeoff inside/outside difference P8b corresponds to a correction parameter.

In step S402, the air conditioning controller 150 corrects the determination values J1 to J8 by using the before-takeoff inside/outside difference P8b. The air conditioning controller 150 corrects the determination values J1 to J8 so that the smaller the before-takeoff inside/outside difference P8b is, the more likely it is that outside air introduction will be selected. In the eVTOL 10, the smaller the before-takeoff inside/outside difference P8b, the greater the rate of change of the inside/outside difference P8 after takeoff tends to be. For example, before the eVTOL 10 takes off, when the inside air temperature is higher than the outside air temperature and the before-takeoff inside/outside difference P8b is small, the outside air temperature decreases as the eVTOL 10 takes off, causing the inside/outside difference change rate P8 to increase. In such manner, when the before-takeoff inside/outside difference P8b is small, the inside/outside difference change rate P8 becomes large, and window fogging is likely to occur. Therefore, the air conditioning controller 150 corrects the determination values J1 to J8 so that the correction values J1c to J8c become smaller as the before-takeoff inside/outside difference P8b becomes smaller. The function of performing the process of step S402 in the air conditioning controller 150 corresponds to a temperature correction unit.

The air conditioning controller 150 may correct the determination values J1 to J8 so that the greater the before-takeoff inside/outside difference P8b, the more likely it is that the outside air introduction will be selected. For example, the air conditioning controller 150 corrects the determination values J1 to J8 so that the correction values J1c to J8c become smaller as the before-takeoff inside/outside difference P8b increases.

The air conditioning controller 150 acquires the number of occupants in step S403. The number of occupants corresponds to a correction parameter. In step S404, the air conditioning controller 150 corrects the determination values J1 to J8 by using the number of occupants. The air conditioning controller 150 corrects the determination values J1 to J8 so that the greater the number of occupants, the more likely it is that the outside air introduction will be selected. In the eVTOL 10, the more passengers there are, the more likely it is that window will be fogged due to breathing or the like. The air conditioning controller 150 corrects the determination values J1 to J8 so that the correction values J1c to J8c become smaller as the number of occupants increases. The function of performing the process of step S404 in the air conditioning controller 150 corresponds to an occupant correction unit.

The air conditioning controller 150 acquires the outside environment information in step S405. The outside environment information includes outside air quality information indicating an outside air quality. The air conditioning controller 150 acquires at least the outside air quality information included in the outside environment information.

In step S406, the air conditioning controller 150 corrects the determination values J1 to J8 by using the outside environment information. The air conditioning controller 150 corrects the determination values J1 to J8 so that the worse the outside air quality, the less likely it is that the outside air introduction will be selected. When outside air of poor quality is introduced into the cabin 15, window fogging is less likely to occur, but there is a concern that the poor outside air quality may cause other inconveniences other than window fogging. Other inconveniences include occupants feeling uncomfortable due to polluted outside air and occupants feeling unwell due to polluted outside air. Therefore, the air conditioning controller 150 corrects the determination values J1 to J8 so that the correction values J1c to J8c become larger as the air quality becomes worse. The function of performing the process of S406 in the air conditioning controller 150 corresponds to an outside air correction unit.

Returning to FIG. 5, after the determination value correction process in step S301, the air conditioning controller 150 proceeds to step S302. The air conditioning controller 150 performs a window fogging determination process in step S302. The window fogging determination process of the present embodiment differs from the window fogging determination process of the first embodiment in that the correction values J1c to J8c are used as the window fogging determination values. Except for using the correction values J1c to J8c as the window fogging determination values, the window fogging determination process of the present embodiment is basically similar to the window fogging determination process of the first embodiment. The function of performing the process of step S302 in the air conditioning controller 150 corresponds to a window fogging determination unit. After the window fogging determination process in step S302, the air conditioning controller 150 performs the processes in steps S105 to S109.

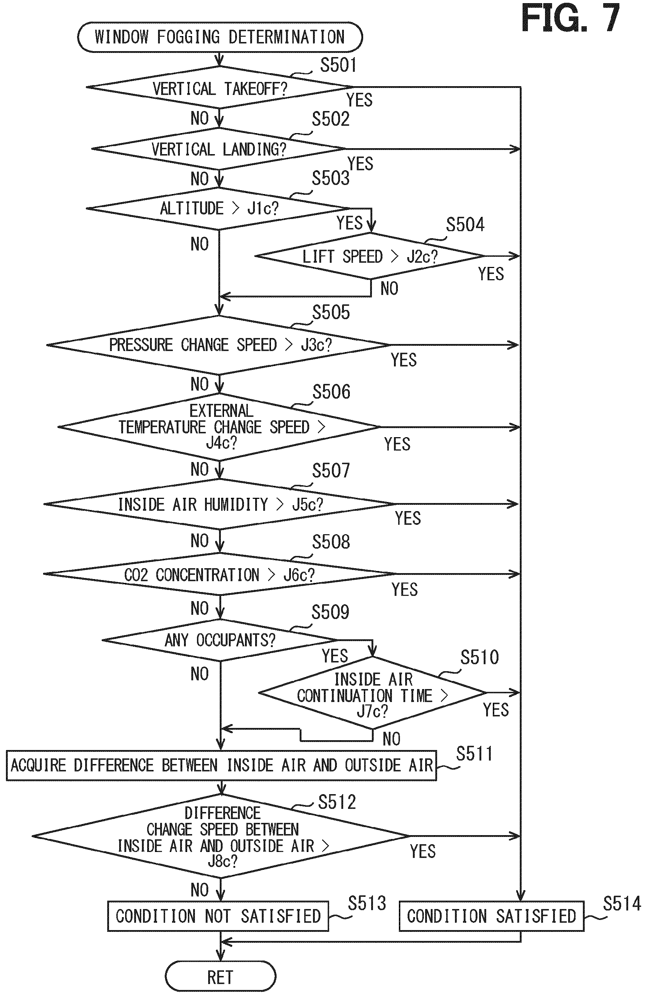

The window fogging determination process will be described with reference to a flowchart of FIG. 7. The air conditioning controller 150 performs steps S501 to S514 in the window fogging determination process. In steps S501 to S514, the processes are basically the same as those in steps S201 to S214 in the first embodiment.

In steps S501 to S504, the air conditioning controller 150 uses the flight information to determine whether or not the window fogging conditions is satisfied. The function of performing the processes in steps S501 to S504 in the air conditioning controller 150 corresponds to a flight determination unit. The air conditioning controller 150 performs a vertical takeoff determination in step S501, and performs a vertical landing determination in step S502. The function of performing the process of step S501 in the air conditioning controller 150 corresponds to a takeoff determination unit. The function of performing the process of step S502 in the air conditioning controller 150 corresponds to a landing determination unit.

In step S503, the air conditioning controller 150 determines whether a flying altitude P1 is higher than the first correction value J1c. In step S504, the air conditioning controller 150 determines whether a lift speed P2 is faster than the second correction value J2c. When the flight altitude P1 is higher than the first correction value J1c and the lift speed P2 is faster than the second correction value J2c, the air conditioning controller 150 determines that the window fogging condition is satisfied. The flight altitude P1 being higher than the first correction value J1c and the lift speed P2 being faster than the second correction value J2c correspond to a window fogging condition. The first correction value J1c and the second correction value J2c are determination values for determining whether or not the window fogging condition is satisfied, and correspond to a window fogging determination values.

The air conditioning controller 150 compares the flying altitude P1 with the first correction value J1c. The result of the determination as to whether the flight altitude P1 is higher than the first correction value J1c corresponds to a result of comparison between the window fogging parameter and the window fogging determination value. The air conditioning controller 150 compares the lift speed P2 with the second correction value J2c. The result of the determination as to whether the lift speed P2 is faster than the second correction value J2c corresponds to a result of comparison between the window fogging parameter and the window fogging determination value. The function of performing the processes in steps S503 and S504 in the air conditioning controller 150 corresponds to a parameter determination unit.

In steps S505 and S506, the air conditioning controller 150 uses the outside environment information to determine whether or not the window fogging condition is satisfied. The function of performing the processes of steps S505 and S506 in the air conditioning controller 150 corresponds to an external determination unit.

In step S505, the air conditioning controller 150 determines whether an air pressure change rate P3 is faster than the third correction value J3c. When the air pressure change rate P3 is faster than the third correction value J3c, the air conditioning controller 150 determines that the window fogging condition is satisfied. The air pressure change rate P3 being faster than the third correction value J3c corresponds to a window fogging condition. The third correction value J3c is a determination value for determining whether or not the window fogging condition is satisfied, and corresponds to a window fogging determination value. The air conditioning controller 150 compares the air pressure change rate P3 with the third correction value J3c. The result of a determination as to whether the air pressure change rate P3 is faster than the third correction value J3c corresponds to a result of comparison between the window fogging parameter and the window fogging determination value. The function of performing the process of step S505 in the air conditioning controller 150 corresponds to a parameter determination unit.

In step S506, the air conditioning controller 150 determines whether an outside air temperature change rate P4 is faster than the fourth correction value J4c. When the outside air temperature change rate P4 is faster than the fourth correction value J4c, the air conditioning controller 150 determines that the window fogging condition is satisfied. The outside air temperature change rate P4 being faster than the fourth correction value J4c corresponds to a window fogging condition. The fourth correction value J4c is a determination value for determining whether or not the window fogging condition is satisfied, and corresponds to a window fogging determination value. The air conditioning controller 150 compares the outside air temperature change rate P4 with the fourth correction value J4c. The result of a determination as to whether the outside air temperature change rate P4 is faster than the fourth correction value J4c corresponds to a result of comparison between the window fogging parameter and the window fogging determination value. The function of performing the process of step S506 in the air conditioning controller 150 corresponds to a parameter determination unit.

In steps S507 to S510, the air conditioning controller 150 uses the in-cabin environment information to determine whether or not the window fogging conditions is satisfied. The function of performing the processes of steps S507 to S510 in the air conditioning controller 150 corresponds to an inside determination unit.

In step S507, the air conditioning controller 150 determines whether an inside air humidity P5 is higher than the fifth correction value J5c. When the inside air humidity P5 is higher than the fifth correction value J5c, the air conditioning controller 150 determines that the window fogging condition is satisfied. The inside air humidity P5 being higher than the fifth correction value J5c corresponds to a window fogging condition. The fifth correction value J5c is a determination value for determining whether or not the window fogging condition is satisfied, and corresponds to a window fogging determination value. The air conditioning controller 150 compares the inside air humidity P5 with the fifth correction value J5c. The result of a determination as to whether the inside air humidity P5 is higher than the fifth correction value J5c corresponds to a result of comparison between the window fogging parameter and the window fogging determination value. The function of performing the process of step S507 in the air conditioning controller 150 corresponds to a parameter determination unit.

In step S508, the air conditioning controller 150 determines whether a CO2 concentration P6 is higher than the sixth correction value J6c. When the CO2 concentration P6 is higher than the sixth correction value J6c, the air conditioning controller 150 determines that the window fogging condition is satisfied. The CO2 concentration P6 being higher than the sixth correction value J6c corresponds to a window fogging condition. The sixth correction value J6c is a determination value for determining whether or not the window fogging condition is satisfied, and corresponds to a window fogging determination value. The air conditioning controller 150 compares the CO2 concentration P6 with the sixth correction value J6c. The result of a determination as to whether the CO2 concentration P6 is higher than the sixth correction value J6c corresponds to a result of comparison between the window fogging parameter and the window fogging determination value. The function of performing the process of step S508 in the air conditioning controller 150 corresponds to a parameter determination unit.

In step S510, the air conditioning controller 150 determines whether an inside air continuation time P7 is longer than the seventh correction value J7c. When the eVTOL 10 has an occupant on board and the inside air continuation time P7 is longer than the seventh correction value J7c, the air conditioning controller 150 determines that the window fogging condition is satisfied. The eVTOL 10 having an occupant on board and the inside air continuation time P7 being longer than the seventh correction value J7c correspond to a window fogging condition. The seventh correction value J7c is a determination value for determining whether or not the window fogging condition is satisfied, and corresponds to a window fogging determination value. The air conditioning controller 150 compares the inside air continuation time P7 with the seventh correction value J7c. The result of a determination as to whether the inside air continuation time P7 is longer than the seventh correction value J7c corresponds to a result of comparison between the window fogging parameter and the window fogging determination value. The function of performing the processes of steps S509 and S510 in the air conditioning controller 150 corresponds to a parameter determination unit.

In step S512, the air conditioning controller 150 determines whether an inside/outside difference change speed P8 is faster than the eighth correction value J8c. When the inside/outside difference change speed P8 is higher than the eighth correction value J8c, the air conditioning controller 150 determines that the window fogging condition is satisfied. The inside/outside difference change speed P8 being higher than the eighth correction value J8c corresponds to a window fogging condition. The eighth correction value J8c is a determination value for determining whether or not the window fogging condition is satisfied, and corresponds to a window fogging determination value. The air conditioning controller 150 compares the inside/outside difference change speed P8 with the eighth correction value J8c. The result of a determination as to whether the inside/outside difference change speed P8 is faster than the eighth correction value J8c corresponds to a result of comparison between the window fogging parameter and the window fogging determination value. The function of performing the process of step S512 in the air conditioning controller 150 corresponds to a parameter determination unit and an inside/outside determination unit.

According to the present embodiment, the air conditioning controller 150 acquires the window fogging determination value, such as the fourth correction value J4c, used to determine whether or not a window fogging condition is satisfied, by correcting a determination reference value, such as the fourth determination value J4. In such configuration, the determination reference value is corrected according to the in-cabin environment information, the outside environment information, and the like, so that the window fogging determination value can be set to a value suitable for the in-cabin environment or the outside environment. Therefore, the accuracy of the comparison result between the window fogging parameter such as the outside air temperature change rate P4 and the window fogging determination value is improvable. Therefore, the accuracy of determining whether or not the window fogging condition is satisfied can be further improved by using the corrected window fogging determination value.

According to the present embodiment, the before-takeoff inside/outside difference P8b, the number of occupants, and the outside air quality information are used to correct the reference determination value that is performed to acquire the window fogging determination value. Therefore, in case that the before-takeoff inside/outside difference P8b affects the likelihood of window fogging, the window fogging determination value is set to a value corresponding to the before-takeoff inside/outside difference P8b, thereby improving the accuracy of estimating the occurrence of window fogging. Further, in case that the number of occupants affects the likelihood of window fogging, the accuracy of estimating the occurrence of window fogging is improvable by setting the window fogging determination value to a value corresponding to the number of occupants. Therefore, the situation where outside air is not introduced even though window fogging is likely to occur is suppressible by using the before-takeoff inside/outside air difference P8b and the number of occupants.

Further, since the window fogging determination value is a value corresponding to the outside air quality information, it is possible to make it difficult for outside air to be introduced when the outside air quality is poor. For example, when an airspace in which the eVTOL 10 is flying is one in which the air is not normal, it is possible to make it difficult for outside air introduction to be selected. Therefore, while window fogging is less likely to occur when outside air is introduced, other inconveniences other than window fogging caused by polluted outside air being introduced into the cabin 15 is suppressible. An example of airspace where the air is not normal include an airspace with severe air pollution such as smog or the like.

### <Third Embodiment>

In the first embodiment, the outside air is introduced when the window fogging condition is satisfied, and the introduction of the outside air is stopped when the window fogging condition is not satisfied. In contrast to the above, in the third embodiment, outside air may be introduced regardless of whether the window fogging condition is satisfied or not satisfied. The configurations, operations, and effects of the third embodiment that are not specifically described are similar to those of the first embodiment. In the third embodiment, the differences from the first embodiment will be mainly described.

The operating modes of an air conditioner system 110 include a mixed mode. The mixed mode is an operating mode in which the air conditioner system 110 performs both inside air circulation and outside air introduction. The mixed mode is one of the inside air circulation functions and one of the outside air introduction functions. The mixed mode performs both of (a) circulation of the inside air circulated between a cabin 15 and the air conditioner system 110 and (b) introduction of a taken-in outside air Air2 into a cabin 15. In the mixed mode, an intake switcher 127 is set to a mixed state. In the mixed mode, an air conditioning controller 150 is capable of adjusting an amount of introduced outside air. The amount of introduced outside air is an amount of the taken-in outside air Air2 introduced into the cabin 15.

For example, in the mixed mode, the amount of introduced outside air is changed in multiple stages. The mixed mode includes a first mixed mode and a second mixed mode. The air conditioning controller 150 is capable of switching the operation mode between the first mixed mode and the second mixed mode. The amount of outside air introduced in the second mixed mode is set to be greater than the amount of outside air introduced in the first mixed mode. On the other hand, the amount of outside air introduced in the second mixed mode is set to be smaller than the amount of outside air introduced in the outside air mode.

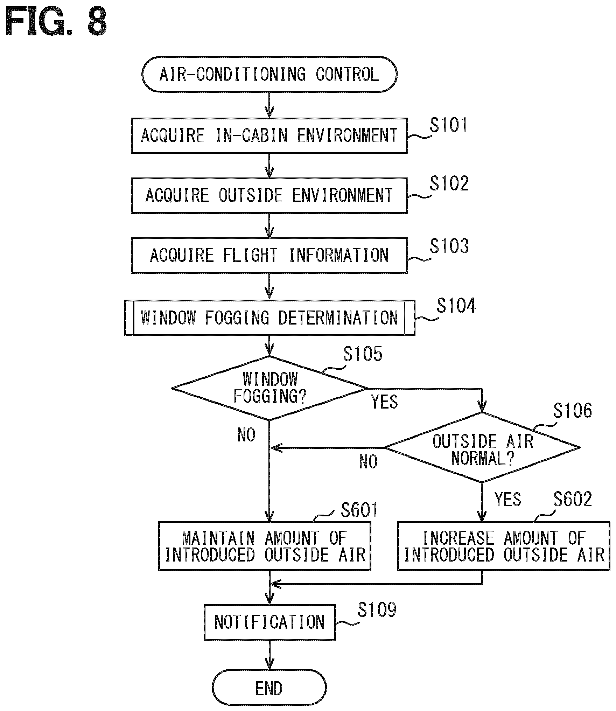

The air conditioning control process of the present embodiment will be described with reference to a flowchart of FIG. 8. The air conditioning controller 150 performs the processes of steps S101 to S106 in the same manner as in the first embodiment. When the window fogging condition is not satisfied in step S104, the air conditioning controller 150 proceeds to step S601. The air conditioning controller 150 performs an outside air maintenance process in step S601. In the outside air maintenance process, an amount of outside air introduced into the cabin 15 is maintained. When the current operation mode is the mixed mode, the outside air maintenance process maintains the operation mode in the mixed mode. When the process proceeds to step S109 after step S601, the air conditioning controller 150 performs a notification process, such as notifying that the operation mode is maintained in the mixed mode.

In steps S105 and S106, when the window fogging condition is satisfied but the outside air is not normal, the air conditioning controller 150 proceeds to step S601, and performs the outside air maintenance process, similarly to the case where the window fogging condition is not satisfied. When proceeding from step S106 via step S601 to step S109, the air conditioning controller 150 performs the notification process, notifying that, for example, (a) the window fogging condition has been satisfied, (b) the outside air is not normal, (c) the amount of introduced outside air is being maintained, and the like.

Regarding steps S105 and S106, when the window fogging condition is satisfied and the outside air is normal, the air conditioning controller 150 proceeds to step S602. The air conditioning controller 150 performs an outside air increase process in step S602. In the outside air increase process, the amount of outside air introduced into the cabin 15 is increased. The air conditioning controller 150 switches the operation mode of the air conditioner system 110 so that the amount of introduced outside air is increased. For example, when the current operation mode is the first mixed mode, the air conditioning controller 150 increases the amount of introduced outside air by switching the operation mode from the first mixed mode to the second mixed mode. Further, when the current operation mode is the second mixed mode, the air conditioning controller 150 switches the operation mode from the second mixed mode to the outside air mode, thereby increasing the amount of introduced outside air.

When the process proceeds to step S109 after step S602, the air conditioning controller 150 performs the notification process to notify that the operation mode has been switched to increase the amount of introduced outside air. The function of performing the process of step S602 in the air conditioning controller 150 corresponds to the outside air increase unit.

### <Fourth Embodiment>

In the above-described first embodiment, when the eVTOL 10 performs vertical takeoff or vertical landing, outside air is introduced into the cabin 15 regardless of the flight altitude P1 or the lift speed P2. In contrast, in the fourth embodiment, when the eVTOL 10 performs vertical takeoff or vertical landing, outside air is introduced into a cabin 15 according to a flight altitude P1 and a lift speed P2. The configurations, operations, and effects of the fourth embodiment that are not specifically described are similar to those of the first embodiment. In the fourth embodiment, the differences from the first embodiment will be mainly described.

An air conditioning controller 150 performs the window fogging determination process in the same manner as in the first embodiment. In the window fogging determination process of the present embodiment, determinations regarding vertical takeoff and vertical landing are made. In the window fogging determination process of the present embodiment, similarly to the first embodiment, a determination regarding an inside air humidity P5 and the like may be made.

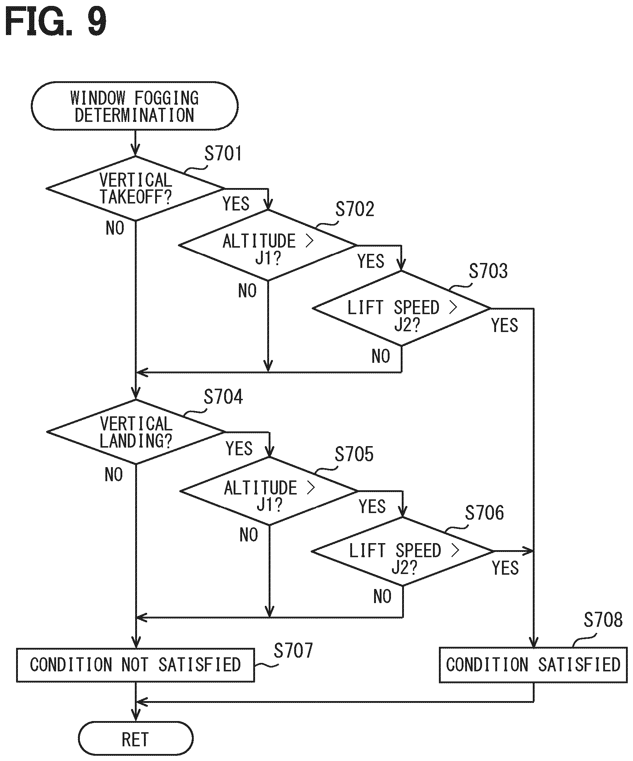

The window fogging determination process will be described with reference to a flowchart of FIG. 9. In steps S701 to S706 of the window fogging determination process, the air conditioning controller 150 uses the flight information to determine whether or not the window fogging condition is satisfied. The function of performing the processes in steps S701 to S706 in the air conditioning controller 150 corresponds to a flight determination unit.

In step S701, the air conditioning controller 150 performs a vertical takeoff determination, similarly to step S201 in the first embodiment. When the eVTOL 10 performs vertical takeoff, the air conditioning controller 150 proceeds to step S702. In step S702, the air conditioning controller 150 determines whether or not a flying altitude P1 is higher than a first determination value J1, similarly to step S203 in the first embodiment. If the flight altitude P1 is higher than the first determination value J1, the air conditioning controller 150 proceeds to step S703. In step S703, the air conditioning controller 150 determines whether a lift speed P2 is faster than a second determination value J2, similarly to step S204 in the first embodiment. In step S703, an ascent speed of the eVTOL 10 in vertical takeoff is set to the lift speed P2.

When the eVTOL 10 performs vertical takeoff, in case that the flight altitude P1 is higher than the first determination value J1 and the lift speed P2 is faster than the second determination value J2, the air conditioning controller 150 determines that a window fogging condition is satisfied. In addition to the eVTOL 10 performing vertical takeoff, the flight altitude P1 being higher than the first determination value J1 and the lift speed P2 being faster than the second determination value J2 correspond to the window fogging condition. The function of performing the processes of steps S702 and S703 in the air conditioning controller 150 corresponds to a parameter determination unit.

When the window fogging condition is satisfied in steps S701 to S703, the air conditioning controller 150 proceeds to step S708. In step S708, the air conditioning controller 150 performs a condition satisfaction process similar to step S214 in the first embodiment.

When the window fogging condition is not satisfied in steps S701 to S703, the air conditioning controller 150 proceeds to step S704. In step S704, the air conditioning controller 150 performs a vertical landing determination, similar to step S202 in the first embodiment. When the eVTOL 10 performs vertical landing, the air conditioning controller 150 proceeds to step S705. In step S705, the air conditioning controller 150 determines whether or not the flying altitude P1 is higher than the first determination value J1, similarly to step S203 in the first embodiment. If the flight altitude P1 is higher than the first determination value J1, the air conditioning controller 150 proceeds to step S706. In step S706, the air conditioning controller 150 determines whether the lift speed P2 is faster than the second determination value J2, similarly to step S204 in the first embodiment. In step S706, a descent speed at which the eVTOL 10 vertically lands is set to the lift speed P2.

When the eVTOL 10 performs vertical landing, in case that the flight altitude P1 is higher than the first determination value J1 and the lift speed P2 is faster than the second determination value J2, the air conditioning controller 150 determines that the window fogging condition is satisfied. In addition to the eVTOL 10 performing vertical landing, the flight altitude P1 being higher than the first determination value J1 and the lift speed P2 being faster than the second determination value J2 correspond to a window fogging condition. The function of performing the processes in steps S705 and S706 in the air conditioning controller 150 corresponds to a parameter determination unit.

When the window fogging condition is satisfied in steps S704 to S706, the air conditioning controller 150 proceeds to step S708, and performs a condition satisfaction process. When the window fogging condition is not satisfied in steps S701 to S706, the air conditioning controller 150 proceeds to step S707. In step S707, the air conditioning controller 150 performs a condition un-satisfied process similarly to step S213 in the first embodiment.

### <Other Embodiments>

The disclosure of the present specification is not limited to the illustrated embodiments. The disclosure encompasses the illustrated embodiments and variations thereon by those skilled in the art. For example, the disclosure is not limited to the combinations of parts and elements shown in the embodiments, and can be implemented in various modified forms. The disclosure can be implemented in various combinations. The disclosure may have additional portions that can be added to the embodiments. The disclosure encompasses embodiments in which parts or elements are omitted. The disclosure encompasses any permutation or combination of parts or elements between one embodiment and another embodiment. The scope of the disclosed technology is not limited to the description of the embodiments. The scope of the disclosed technology is defined by the description of the claims, and should be interpreted as including all modifications within the meaning and scope equivalent to the description of the claims.

In each of the above-described embodiments, when the window fogging condition is satisfied, so long as outside air is introduced to suppress window fogging, the amount of introduced outside air needs not be increased. For example, when a window fogging condition is satisfied, the position into which the outside air is introduced may be changed to suppress window fogging. In a configuration in which multiple air conditioning outlet ports 137 are provided in a cabin 15, when the window fogging condition is satisfied, the air conditioning outlet port 137 that blows out a taken-in outside air Air2 as a conditioned air Air3 may be changed.

For example, in a configuration in which the air conditioning outlet port 137 is provided in each of a passenger compartment and a pilot compartment in the cabin 15, when a window fogging condition is satisfied, outside air may be introduced into the pilot compartment by blowing out the taken-in outside air Air2 from the air conditioning outlet port 137 in the pilot compartment. In such case, it is preferable that the outside air introduction for anti-fogging purposes is limited to the pilot compartment from among the passenger compartment and the pilot compartment. In such manner, a window 16 in the pilot compartment is prevented from fogging without affecting air in the cabin.

Further, in a configuration in which the multiple air conditioning outlet ports 137 in the cabin 15 include a window-facing air conditioning outlet port and an other-facing air conditioning outlet port, when a window fogging condition is satisfied, the taken-in outside air Air2 may be blown out from the window-facing air conditioning outlet port toward the window 16. The window-facing air conditioning outlet port is an air conditioning outlet port 137 that blows out the taken-in outside air Air2 toward the window 16. The other-facing air conditioning outlet port is an air conditioning outlet port 137 that blows out the taken-in outside air Air2 in a direction different from the window 16.

Further, in a configuration in which the multiple windows 16 include a pilot window and a passenger window, when a window fogging condition is satisfied, outside air may be introduced to suppress fogging of at least the pilot window. For example, when the window fogging condition is satisfied, outside air is introduced so that the taken-in outside air Air2 hits at least the pilot window. The pilot window is a window through which the pilot can visually confirm outside the aircraft or the like. The passenger window is a window through which passengers can see outside the aircraft. Preventing fogging of the window 16 is particularly important for the pilot window, while preventing fogging of the passenger window not used for flight is a lower priority.

In the eVTOL 10, a camera for capturing images for remote operation may be provided in the cabin 15. In such configuration, when the window fogging condition is satisfied, outside air may be introduced to suppress fogging of the window in a portion seen by the camera.

In each of the above-described embodiments, the air conditioning controller 150 may use at least one of the flight information, the in-cabin environment information, and the outside environment information to determine whether the window fogging condition is satisfied. In other words, the air conditioning controller 150 needs to have at least one of a flight determination unit, an inside determination unit, and an outside determination unit. The air conditioning controller 150 may introduce outside air when at least one of the flight determination unit, the inside determination unit, and the outside determination unit determines that a window fogging condition is satisfied. For example, the air conditioning controller 150 may introduce outside air when it is determined that the window fogging condition is satisfied by all of the flight determination unit, the inside determination unit, and the outside determination unit.

In each of the above-described embodiments, the air conditioning controller 150 may use at least one window fogging parameter to determine whether or not the window fogging condition is satisfied. In other words, the air conditioning controller 150 needs to have at least one parameter determination unit. The air conditioning controller 150 may introduce outside air when at least one of the parameter determination units determines that the window fogging condition is satisfied. For example, the air conditioning controller 150 may introduce outside air when it is determined that the window fogging condition is satisfied by all of the multiple parameter determination units.

In each of the above-described embodiments, the air conditioning controller 150 may use at least one of the flight information, the in-cabin environment information, and the outside environment information to correct the reference determination value. The air conditioning controller 150 may correct the reference determination value using all of the flight information, the in-cabin environment information, and the outside environment information.

In each of the above-described embodiments, a fogging sensor that detects fogging on the window 16 may be provided in the eVTOL 10. For example, when the fogging sensor detects fogging on the window 16, the air conditioning controller 150 determines that the window fogging condition is satisfied.

In each of the above-described embodiments, the number of occupants or the like may be used as the window fogging parameter. In a configuration in which the number of occupants is used as a window fogging parameter, a window fogging determination value is set according to the number of occupants. For example, in the second embodiment described above, a reference determination value may be set according to the number of occupants, and such reference determination value may be corrected by a correction parameter.

In each of the above-described embodiments, a flight controller 40 may be included in an air conditioner system 110. That is, at least one of an air conditioning controller 150 and the flight controller 40 may be included in the air conditioner system 110. In such configuration, the air conditioner system 110 is controlled by at least one of the air conditioning controller 150 and the flight controller 40. In such case, at least one of the air conditioning controller 150 and the flight controller 40 corresponds to an air conditioning control device. Further, in such configuration, at least one of processors 41 and 151 corresponds to a processing unit, and at least one of programs 43 and 153 corresponds to an air conditioning control program.

In each of the above-described embodiments, the eVTOL 10 does not have to be a tilt rotor aircraft. In other words, the eVTOL 10 does not have to have a configuration in which one rotor 20 functions as both of a lift rotor and a cruise rotor. For example, the configuration thereof may be that one rotor 20 functions as only one of the lift rotor and the cruise rotor. In such configuration, in the eVTOL 10, the multiple rotors 20 include a lift rotor and a cruise rotor.

In each of the above-described embodiments, the vertical take-off and landing aircraft on which the air conditioning controller 150 is installed may be an electrically-powered vertical take-off and landing aircraft in which at least one rotor 20 is driven by at least one EPU 50. For example, a configuration in which a single rotor 20 is driven by multiple EPUs 50, or a configuration in which a single EPU 50 drives multiple rotors 20 may be used.

In each of the above-described embodiments, the aircraft on which the air conditioning controller 150 is installed does not have to be a vertical take-off and landing aircraft as long as it is electrically powered. For example, the aircraft may be an electric aircraft capable of taking off and landing with a runway. Further, the aircraft may also be a rotorcraft or a fixed wing aircraft.

In each of the above-described embodiments, the air conditioning controller 150 is provided by a control system including at least one computer. The control system includes at least one processor that is hardware. By designating such processor as a hardware processor, the hardware processor may be provided by (i), (ii), or (iii) described below.
(i) The hardware processor may be a hardware logic circuit. In such case, the computer is provided by digital circuitry that includes a number of programmed logic units. The logic unit is, for example, a gate circuit. The digital circuit may include a memory that stores at least one of programs and data. The computer may be implemented with analog circuitry. A computer may be implemented by using a combination of digital and analog circuitry.
(ii) The hardware processor may be at least one processor core that executes programs stored in at least one memory. In such case, the computer is provided with at least one memory and at least one processor core. The processor core is called, for example, as a CPU. The memory is also referred to as a storage medium. The memory is a non-transitory, tangible storage medium that non-temporarily stores "at least one of programs and/or data" that can be read by a processor.
(iii) The hardware processor may be a combination of the above-described item (i) and the above-described item (ii). The above-described items (i) and (ii) may be arranged on different chips or on a common chip.

In other words, at least one of the means and functions provided by the air conditioning controller 150 can be provided by hardware alone, software alone, or a combination of both.

### (Disclosure of Technical Ideas)

The present specification discloses several technical ideas described in several clauses listed below. Some clauses may have a dependent clause depending therefrom which is written in a multiple dependent form, i.e., the depending clause referring to multiple and alternative dependent clauses. Further, some clauses may be described in a multiple dependent form referring to another multiple dependent form clause. These clauses written in a multiple dependent form define multiple technical ideas.

### (Technical Idea 1)

An air conditioner (110) is provided in an aircraft (10) flying by using an electrical propulsion device (100), for air-conditioning the aircraft by using at least one of inside air and outside air of the aircraft. The air conditioner includes: a window fogging determination unit (S104, S302) configured to determine whether a window fogging condition for fogging a window (16) of the aircraft is satisfied; and an outside air increase unit (S108, S602) configured to increase an amount of the outside air (Air2) introduced into an inside of the aircraft when the window fogging condition is satisfied.

### (Technical Idea 2)

In the air conditioner according to technical idea 1, the outside air increase unit includes an outside air mode unit (S108) configured to switch an operating mode of the electrical propulsion device from an inside air mode for circulating the inside air in the aircraft to an outside air mode for introducing the outside air into the inside of the aircraft.

### (Technical Idea 3)

In the air conditioner according to technical idea 1 or 2, the window fogging determination unit includes at least one of:
a flight determination unit (S201 to S204, S501 to S504, S701 to S706) configured to determine whether the window fogging condition is satisfied by using flight information indicating a flight state of the aircraft;
an internal determination unit (S207 to S210, S507 to S510) configured to determine whether the window fogging condition is satisfied by using internal environment information indicating an internal environment of the aircraft; and
an external determination unit (S205, S206, S505, S506) configured to determine whether the window fogging condition is satisfied by using external environment information indicating an external environment of the aircraft.

### (Technical Idea 4)

In the air conditioner according to any one of technical ideas 1 to 3, the window fogging determination unit includes an inside/outside determination unit (S212, S512) configured to determine whether the window fogging condition is satisfied by using inside/outside difference information indicating a change mode in an inside/outside difference (P8a) that is a difference between an inside air temperature and an outside air temperature of the aircraft.

### (Technical Idea 5)

In the air conditioner according to any one of technical ideas 1 to 4, the window fogging determination unit includes:
a takeoff determination unit (S201, S501) determining that the window fogging condition is satisfied when the aircraft performs vertical takeoff.

### (Technical Idea 6)

In the air conditioner according to any one of technical ideas 1 to 5, the window fogging determination unit includes a landing determination unit (S202, S502) configured to determine that the window fogging condition is satisfied when the aircraft performs a vertical landing.

### (Technical Idea 7)

In the air conditioner according to any one of technical ideas 1 to 6, the window fogging determination unit includes a parameter determination unit (S203 to S208, S210, S212, S503 to S508, S510, S512, S702, S703, S705, S706) configured to determine whether the window fogging condition is satisfied by using a result of comparison between a window fogging parameter (P1 to P8) related to the window fogging condition and a window fogging determination value (J1 to J8, J1c to J8c) predetermined.

### (Technical Idea 8)

The air conditioner according to technical idea 7 further includes a determination value correction unit (S301) configured to correct a predetermined reference determination value (J1 to J8) related to the window fogging conditions to acquire the window fogging determination value (J1c to J8c).

### (Technical Idea 9)

In the air conditioner according to technical idea 8, the determination value correction unit includes at least one of:
a temperature correction unit (S402) configured to correct the reference determination value by using a temperature difference (P8b) between the inside air and the outside air before the aircraft takes off;
an occupant correction unit (S404) configured to correct the reference determination value by using the number of occupants on the aircraft; and
an outside air correction unit (S406) configured to correct the reference determination value by using outside air quality information indicating a quality of the outside air.

## Claims

1. An air conditioner (110), to be provided in an aircraft (10) flying by using an electrical propulsion device (100), for air-conditioning the aircraft by using at least one of inside air and outside air of the aircraft, the air conditioner comprising:
a window fogging determination unit (S104, S302) configured to determine whether a window fogging condition for fogging a window (16) of the aircraft is satisfied; and
an outside air increase unit (S108, S602) configured to increase an amount of the outside air (Air2) introduced into an inside of the aircraft when the window fogging condition is satisfied.

2. The air conditioner according to claim 1 further comprising:
the outside air increase unit includes an outside air mode unit (S108) configured to switch an operating mode of the electrical propulsion device from an inside air mode for circulating the inside air in the aircraft to an outside air mode for introducing the outside air into the inside of the aircraft.

3. The air conditioner according to claim 1 or 2, wherein
the window fogging determination unit includes at least one of:
a flight determination unit (S201 to S204, S501 to S504, S701 to S706) configured to determine whether the window fogging condition is satisfied by using flight information indicating a flight state of the aircraft;
an internal determination unit (S207 to S210, S507 to S510) configured to determine whether the window fogging condition is satisfied by using internal environment information indicating an internal environment of the aircraft; and
an external determination unit (S205, S206, S505, S506) configured to determine whether the window fogging condition is satisfied by using external environment information indicating an external environment of the aircraft.

4. The air conditioner according to claim 1 or 2, wherein
the window fogging determination unit includes an inside/outside determination unit (S212, S512) configured to determine whether the window fogging condition is satisfied by using inside/outside difference information indicating a change mode in an inside/outside difference (P8a) that is a difference between an inside air temperature and an outside air temperature of the aircraft.

5. The air conditioner according to claim 1 or 2, wherein
the window fogging determination unit includes:
a takeoff determination unit (S201, S501) configured to determine that the window fogging condition is satisfied when the aircraft performs a vertical takeoff.

6. The air conditioner according to claim 1 or 2, wherein
the window fogging determination unit includes a landing determination unit (S202, S502) configured to determine that the window fogging condition is satisfied when the aircraft performs a vertical landing.

7. The air conditioner according to claim 1 or 2, wherein
the window fogging determination unit includes a parameter determination unit (S203 to S208, S210, S212, S503 to S508, S510, S512, S702, S703, S705, S706) configured to determine whether the window fogging condition is satisfied by using a result of comparison between a window fogging parameter (P1 to P8) related to the window fogging condition and a window fogging determination value (J1 to J8, J1c to J8c) predetermined.

8. The air conditioner according to claim 7, further comprising:
a determination value correction unit (S301) configured to correct a predetermined reference determination value (J1 to J8) related to the window fogging conditions to acquire the window fogging determination value (J1c to J8c).

9. The air conditioner according to claim 8, wherein
the determination value correction unit includes at least one of:
a temperature correction unit (S402) configured to correct the reference determination value by using a temperature difference (P8b) between the inside air and the outside air before the aircraft takes off;
an occupant correction unit (S404) configured to correct the reference determination value by using the number of occupants on the aircraft; and
an outside air correction unit (S406) configured to correct the reference determination value by using outside air quality information indicating a quality of the outside air.

10. An air conditioning control device (150) provided in an aircraft (10) that flies by an electric propulsion device (100) and configured to control an air conditioner (110) that performs air-conditioning of the aircraft by using at least one of inside air and outside air of the aircraft, the air conditioning control device comprising:
a window fogging determination unit (S104, S302) configured to determine whether a window fogging condition for fogging a window (16) of the aircraft is satisfied; and
an outside air increase unit (S108, S602) configured to increase an amount of the outside air (Air2) introduced into an inside of the aircraft when the window fogging condition is satisfied.

11. An air conditioning control program (153) for controlling an air conditioner (110), which is provided in an aircraft (10) flying by an electric propulsion device (100) to perform an air-conditioning of the aircraft by using at least one of inside air and outside air of the aircraft, the air conditioning control program being configured to cause at least one processor to execute instruction of:
determining (S104, S302) whether a window fogging condition for fogging a window (16) of the aircraft is satisfied; and
increasing (S108, S602) an amount of the outside air (Air2) introduced into an inside of the aircraft when the window fogging condition is satisfied.
